# EUROPEAN PATENT APPLICATION

(11) **EP 4 130 068 A1**
(43) Date of publication of application: **08.02.2023**
(21) Application number: 21777178.1
(22) Date of filing: 23.03.2021
(51) Int. Cl.: C08F 265/04, C08F 265/06, C08F 290/04, C08F 220/12, C08L 33/06, C08L 33/12

(54) **COPOLYMER, RESIN COMPOSITION, SHAPED OBJECT, FILMY SHAPED OBJECT, AND METHOD FOR PRODUCING COPOLYMER**

(30) Priority: 26.03.2020 JP 2020055361; 30.11.2020 JP 2020198558
(71) Applicant: Mitsubishi Chemical Corporation, Chiyoda-ku Tokyo 100-8251 (JP)
(72) Inventor: OTANI, Go, Tokyo 100-8251 (JP); TOKURA, Yu, Tokyo 100-8251 (JP); YAMAUCHI, Akira, Tokyo 100-8251 (JP)
(74) Representative: Hoffmann Eitle
(86) International application number: PCT/JP2021/011946
(87) International publication number: WO 2021/193613

(57) **Abstract**

Provided is a copolymer which has a mass average molecular weight (Mw) of 240,000 or greater and 3,500,000 or less, a structural unit derived from an acrylate (B1) and a structural unit derived from aromatic vinyl (B2), and a branched structure.

## Description

### [Technical Field]

The present invention relates to a copolymer, a resin composition, a molded product, a filmy molded product, and a method for producing a copolymer.

Priorities are claimed on Japanese Patent Application No. 2020-055361, filed March 26, 2020 and Japanese Patent Application No. 2020-198558, filed November 30, 2020, the contents of which are incorporated herein by reference.

### [Background Art]

An acrylic resin is excellent in transparency, weather resistance, an elastic modulus, surface hardness, and the like, and thus has been widely used for liquid crystal or organic EL display front plates, signboard products, lighting products, home appliances, vehicle interior/exterior materials, industrial materials, construction materials, lenses, light guide plates, light condensing members, optical films used for liquid crystal or organic EL displays, and the like.

However, in some of these applications, acrylic resin products are required to have improved impact resistance while a high elastic modulus is maintained. Further, it is required that the acrylic resin can be molded into a shape with a small thickness or a complicated shape by using a melt molding method such as injection molding or extrusion molding. That is, there is a demand for an acrylic resin with excellent melt moldability.

For example, Patent Document 1 discloses, as a technique for improving the impact resistance of an acrylic resin, a resin composition obtained by blending rubber (core-shell rubber) that has a core-shell structure having a core portion consisting of crosslinked rubber and a shell portion ensuring dispersibility and compatibility between the core portion and a (meth)acrylic polymer serving as a matrix, with a (meth)acrylic resin.

However, since the resin composition described in Patent Document 1 contains core-shell rubber, the melt viscosity is likely to increase and the melt moldability is likely to decrease, and thus there is a problem in that the applications of the resin composition are limited to resin products with a large thickness or resin products with a simple shape. Further, although the molded product formed of the resin composition is transparent around room temperature, there is a problem in that the transparency is degraded in a high temperature environment. Further, when an acrylic resin blended with core-shell rubber is molded into a film, there is a problem in that the film is whitened when the film is bent.

As a method for solving the above-described problems, a resin composition obtained by blending a block copolymer or a graft copolymer (hereinafter, referred to as "block/graft copolymer") in place of the core-shell rubber with a (meth)acrylic resin has been known. Since the block/graft copolymer is formed such that two or more polymer segments are linked to each other via a chemical bond, a phase separation structure of the resin composition obtained by blending the block/graft copolymer having a poly(meth)acrylate chain with an acrylic resin has a nanometer size (also referred to as "microphase separation structure"). Therefore, in the resin composition and the molded product obtained by molding the resin composition, the characteristics of both the acrylic resin serving as a matrix and the block/graft copolymer can be exhibited, and the characteristics of each polymer segment of the block/graft copolymer can be exhibited.

The acrylic resin has excellent transparency, but has a problem of being hard and brittle. However, since the microphase separation structure is formed in the resin composition obtained by blending the block/graft copolymer with the acrylic resin, the transparency of the acrylic resin is favorably maintained in the molded product obtained by molding the resin composition, and the characteristics (for example, the impact resistance) of each polymer segment of the block/graft copolymer can be exhibited.

As a technique for improving the impact resistance of the acrylic resin using a block copolymer, for example, Patent Document 2 describes that a block copolymer is obtained by a method for performing controlled radical polymerization in the presence of a nitroxide. Specifically, Patent Document 2 discloses a technique for obtaining a sheet-like molded product containing a block copolymer using a method for adding syrup to a mold and performing polymerization to produce a cast sheet. It is described that the obtained sheet-like molded product contains an acrylic resin and a block copolymer having a polymethyl methacrylate chain and an n-butyl acrylate/styrene copolymer chain and has excellent impact resistance and transparency.

Meanwhile, as a method for producing the block/graft copolymer described above, a method for producing an acrylic macromonomer (hereinafter, also referred to as "macromonomer") in advance using an extremely small amount of a cobalt complex having an extremely high chain transfer constant and copolymerizing the macromonomer and other monomers to produce a block/graft copolymer is known. The method for producing an acrylic macromonomer using a cobalt complex is known as a catalytic chain transfer polymerization (CCTP) method. The macromonomer is a polymer containing a polymerizable functional group in the molecular structure and is also referred to as a macromer.

Patent Document 3 discloses a technique for improving impact resistance by applying CCTP to an emulsion polymerization method to produce a macromonomer, copolymerizing the obtained macromonomer with another acrylic monomer using the emulsion polymerization method to produce a graft copolymer (comb copolymer) (corresponding to "block/graft copolymer" of the present application), and adding the obtained graft copolymer to a thermoplastic resin.

Further, Patent Document 4 discloses a technique for achieving the balance between impact resistance and transparency by applying CCTP to a suspension polymerization method to produce a macromonomer, copolymerizing the obtained macromonomer with other acrylic monomers using a solution polymerization method to produce a macromonomer copolymer, and adding the obtained macromonomer copolymer to an acrylic resin.

### [Citation List]

### [Patent Documents]

[Patent Document 1] Japanese Examined Patent Application, Second Publication No. S62-21804
[Patent Document 2] Japanese Unexamined Patent Application, First Publication No. 2008-274290
[Patent Document 3] Published Japanese Translation No. 2004-509195 of the PCT International Publication
[Patent Document 4] Japanese Unexamined Patent Application, First Publication No. 2018-159023

### [Summary of Invention]

### [Technical Problem]

However, since the synthesis of the block copolymer, the synthesis of the polymethyl methacrylate serving as a matrix, and the production of the molded product are performed at the same time in the method described in Patent Document 2, there is a problem in that the melt molding method cannot be applied and the molded product cannot be molded into a shape with a small thickness or a complicated shape.

Meanwhile, in the method described in Patent Document 3, the molded product formed of a thermoplastic resin composition to be obtained is not transparent because the refractive index of the graft polymer and the refractive index of the acrylic resin serving as the matrix are different from each other.

Further, in the method described in Patent Document 4, the transparency of the molded product to be obtained is not sufficient because the refractive index of the macromonomer copolymer and the refractive index of the acrylic resin serving as a matrix are different from each other.

An object of the present invention is to solve the above-described problems.

That is, an object of the present invention is to provide a molded product having excellent impact resistance and excellent transparency in a wide use temperature range and a resin composition with excellent melt moldability for molding the molded product. Further, an object of the present invention is to provide a resin composition capable of suppressing whitening when a film is bent.

Further, an object of the present invention is to provide a filmy molded product having excellent impact resistance and excellent transparency in a wide use temperature range and capable of suppressing whitening when a film is bent, and a resin composition for molding the filmy molded product.

Further, an object of the present invention is to provide a copolymer which is a constituent component of the resin composition and a method for producing the copolymer.

### [Solution to Problem]

[1] A copolymer which has a mass average molecular weight (Mw) of 240,000 or greater and 3,500,000 or less, the copolymer including: a structural unit derived from an acrylate (B1); and a structural unit derived from aromatic vinyl (B2), in which the copolymer has a branched structure.
[2] The copolymer according to [1], in which the branched structure includes the structural unit derived from the acrylate (B1) and the structural unit derived from the aromatic vinyl (B2).
[3] The copolymer according to [1] or [2], in which a main chain structure of the copolymer includes the structural unit derived from the acrylate (B1) and the structural unit derived from the aromatic vinyl (B2).
[4] The copolymer according to any one of [1] to [3], in which the copolymer has a structural unit derived from a macromonomer (A), and the macromonomer (A) is represented by General Formula (1). 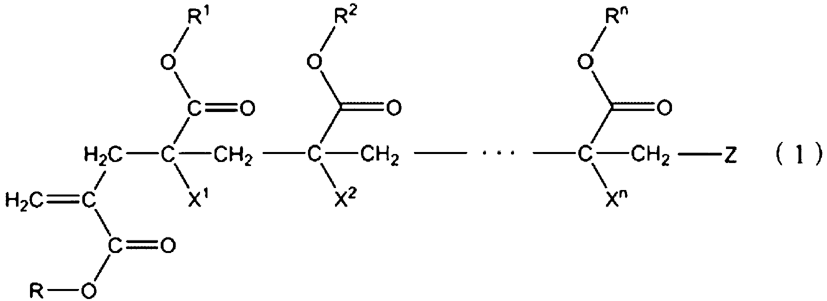 In Formula (1), R and R¹ to Rⁿ each independently represent a hydrogen atom, an alkyl group, a cycloalkyl group, an aryl group, or a heterocyclic group, X¹ to Xⁿ each independently represent a hydrogen atom or a methyl group, Z represents a terminal group, and n represents a natural number of 2 to 10,000.
[5] The copolymer according to [4], in which the structural unit derived from the macromonomer (A) includes 80% by mass or greater of a repeating unit derived from methyl methacrylate with respect to 100% by mass of a total mass of the structural unit derived from the macromonomer (A).
[6] A copolymer including: a structural unit derived from a macromonomer (A) represented by General Formula (1); and a structural unit derived from a comonomer (B) that is copolymerizable with the macromonomer (A), in which the copolymer has a mass average molecular weight (Mw) of 240,000 or greater and 3,500,000 or less, and the structural unit derived from the comonomer (B) includes a structural unit derived from an acrylate (B1) and a structural unit derived from aromatic vinyl (B2). 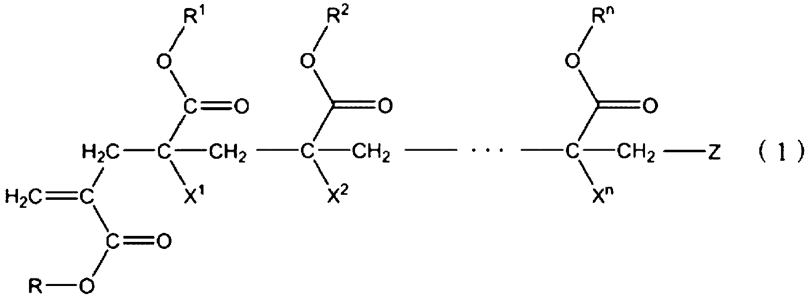 In Formula (1), R and R¹ to Rⁿ each independently represent a hydrogen atom, an alkyl group, a cycloalkyl group, an aryl group, or a heterocyclic group, X¹ to Xⁿ each independently represent a hydrogen atom or a methyl group, Z represents a terminal group, and n represents a natural number of 2 to 10,000.
[7] The copolymer according to any one of [4] to [6], in which the structural unit derived from the macromonomer (A) includes 80% by mass or greater of a repeating unit derived from methyl methacrylate with respect to 100% by mass of a total mass of the structural unit derived from the macromonomer (A).
[8] The copolymer according to any one of [4] to [7], in which the macromonomer (A) has a mass average molecular weight (Mw) of 10,000 or greater and 100,000 or less.
[9] The copolymer according to any one of [4] to [8], in which the macromonomer (A) has a mass average molecular weight (Mw) of 30,000 or greater and 100,000 or less.
[10] The copolymer according to any one of [1] to [9], in which in the acrylate (B1), a homopolymer of the acrylate (B1) has a glass transition temperature (Tg) of lower than 0°C.
[11] The copolymer according to any one of [1] to [10], in which the copolymer has a mass average molecular weight (Mw) of preferably 300,000 or greater and 3,000,000 or less and more preferably 600,000 or greater and 2,000,000 or less.
[12] The copolymer according to any one of [4] to [11], in which a proportion of the macromonomer (A) unit contained in the copolymer is preferably 35% by mass or greater and 75% by mass or less, more preferably 40% by mass or greater and 70% by mass or less, still more preferably 45% by mass or greater and 70% by mass or less, particularly preferably 50% by mass or greater and 65% by mass or less, and most preferably 55% by mass or greater and 65% by mass or less with respect to 100% by mass of a total mass of the copolymer.
[13] The copolymer according to any one of [4] to [12], in which the macromonomer (A) has a mass average molecular weight (Mw) of preferably 10,000 or greater and 100,000 or less, more preferably 12,000 or greater and 80,000 or less, still more preferably 15,000 or greater and 60,000 or less, and particularly preferably 20,000 or greater and 40,000 or less.
[14] The copolymer according to [6], in which a proportion of the structural unit of the acrylate (B1) contained in the structural unit derived from the comonomer (B) is preferably 70% by mass or greater and 100% by mass or less, more preferably 79% by mass or greater and 95% by mass or less, and still more preferably 81% by mass or greater and 90% by mass or less with respect to 100% by mass of the total mass of the comonomer (B).
[15] The copolymer according to [6] or [14], in which a proportion of the structural unit of the aromatic vinyl (B2) contained in the structural unit derived from the comonomer (B) is preferably in a range of 10% to 30% by mass, more preferably in a range of 13% to 21% by mass, and still more preferably in a range of 15% to 19% by mass with respect to 100% by mass of the total mass of the comonomer (B).
[16] The copolymer according to [6], [14], or [15], in which a ratio (A:B) of a proportion of the macromonomer (A) unit (A, unit: % by mass) to a proportion of the structural unit derived from the comonomer (B) (B, unit: % by mass) is preferably in a range of 35:65 to 75:25, more preferably in a range of 40:60 to 70:30, still more preferably in a range of 45:55 to 70:30, particularly preferably in a range of 50:50 to 65:35, and most preferably in a range of 55:45 to 65:35.
[17] The copolymer according to any one of [1] to [16], in which the acrylate (B1) is at least one selected from the group consisting of 2-ethylhexyl acrylate, 4-hydroxybutyl acrylate, n-butyl acrylate, n-propyl acrylate, ethyl acrylate, and 2-hydroxyethyl acrylate.
[18] The copolymer according to any one of [1] to [17], in which the aromatic vinyl (B2) is at least one selected from the group consisting of styrene, α-methylstyrene, o-methylstyrene, p-methylstyrene, o-ethylstyrene, p-ethylstyrene, p-t-butylstyrene, vinyl ethyl benzene, vinyltoluene, vinylxylene, vinylnaphthalene, diphenylethylene, and divinylbenzene.
[19] A method for producing a copolymer, including a step of subjecting a mixture containing a polymerizable composition (X) and a polymerization initiator to a polymerization reaction, in which the polymerizable composition (X) consists of a macromonomer (A) represented by General Formula (1) and a comonomer (B) that is copolymerizable with the macromonomer (A), and the comonomer (B) contains an acrylate (B1) and aromatic vinyl (B2). 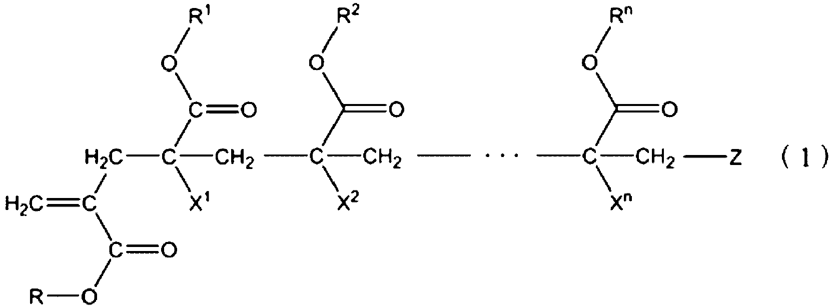 In Formula (1), R and R¹ to Rⁿ each independently represent a hydrogen atom, an alkyl group, a cycloalkyl group, an aryl group, or a heterocyclic group, X¹ to Xⁿ each independently represent a hydrogen atom or a methyl group, Z represents a terminal group, and n represents a natural number of 2 to 10,000.
[20] The method for producing a copolymer according to [19], in which the macromonomer (A) contains 80% by mass or greater of a repeating unit derived from methyl methacrylate with respect to 100% by mass of a total mass of the macromonomer (A).
[21] The method for producing a copolymer according to [19] or [20], in which the macromonomer (A) has a mass average molecular weight (Mw) of 10,000 or greater and 100,000 or less.
[22] The method for producing a copolymer according to any one of [19] to [21], in which in the acrylate (B1), a homopolymer of the acrylate (B1) has a glass transition temperature (Tg) of lower than 0°C.
[23] The method for producing a copolymer according to any one of [19] to [22], in which a step of producing the macromonomer (A) by performing suspension polymerization and a step of producing the copolymer by performing suspension polymerization are performed in an identical reaction container.
[24] The method for producing a copolymer according to any one of [19] to [23], in which a ratio (A:B) of a proportion of the macromonomer (A) (A, unit: % by mass) contained in the polymerizable composition (X) to a proportion of the comonomer (B) (B, unit: % by mass) is preferably in a range of 35:65 to 75:25, more preferably in a range of 40:60 to 70:30, still more preferably in a range of 45:55 to 70:30, particularly preferably in a range of 50:50 to 65:35, and most preferably in a range of 55:45 to 65:35.
[25] A method for producing a copolymer according to any one of [19] to [24], further including a syrup preparation step; a radical polymerization initiator dissolution step; and a step of preparing an aqueous solution.
[26] The method for producing a copolymer according to any one of [19] to [25], in which a proportion of the acrylate (B1) contained in the comonomer (B) is preferably 70% by mass or greater and 100% by mass or less, more preferably 79% by mass or greater and 95% by mass or less, and still more preferably 81% by mass or greater and 90% by mass or less with respect to 100% by mass of a total mass of the comonomer (B).
[27] The method for producing a copolymer according to any one of [19] to [26], in which the acrylate (B1) is at least one selected from the group consisting of 2-ethylhexyl acrylate, 4-hydroxybutyl acrylate, n-butyl acrylate, n-propyl acrylate, ethyl acrylate, and 2-hydroxyethyl acrylate.
[28] The method for producing a copolymer according to any one of [19] to [27], in which a proportion of the aromatic vinyl (B2) contained in the comonomer (B) is preferably in a range of 10% to 30% by mass, more preferably in a range of 13% to 21% by mass, and still more preferably in a range of 15% to 19% by mass with respect to 100% by mass of the total mass of the comonomer (B).
[29] The method for producing a copolymer according to any one of [19] to [28], in which the aromatic vinyl (B2) is at least one selected from the group consisting of styrene, α-methylstyrene, o-methylstyrene, p-methylstyrene, o-ethylstyrene, p-ethylstyrene, p-t-butylstyrene, vinyl ethyl benzene, vinyltoluene, vinylxylene, vinylnaphthalene, diphenylethylene, and divinylbenzene.
[30] A resin composition including: a (meth)acrylic polymer (M); and the copolymer according to any one of [1] to [18], in which the (meth)acrylic polymer (M) has 80% by mass or greater of a repeating unit derived from methyl methacrylate with respect to 100% by mass of a total weight of the (meth)acrylic polymer (M).
[31] The resin composition according to [30], in which a content of the (meth)acrylic polymer (M) is 10% by mass or greater and 99% by mass or less, and a content of the copolymer is 1% by mass or greater and 90% by mass or less with respect to 100% by mass of a total mass of the resin composition.
[32] The resin composition according to [30] or [31], in which the resin composition is a molding material used for injection molding of extrusion molding.
[33] The resin composition according to any one of [30] to [32], in which the resin composition is a molding material used for extruded film molding.
[34] The resin composition according to any one of [30] to [33], in which a proportion of the (meth)acrylic polymer (M) is preferably in a range of 10% to 99% by mass, more preferably in a range of 20% to 98% by mass, and still more preferably in a range of 50% to 90% by mass with respect to 100% by mass of the total mass of the resin composition.
[35] The resin composition according to any one of [30] to [34], in which a proportion of the copolymer is preferably in a range of 1% to 90% by mass, more preferably in a range of 2% to 80% by mass, and still more preferably in a range of 10% to 50% by mass with respect to 100% by mass of the total mass of the resin composition.
[36] The resin composition according to any one of [30] to [35], in which the (meth)acrylic polymer (M) has a mass average molecular weight (Mw) of preferably 30,000 or greater and 1,000,000 or less, more preferably 50,000 or greater and 500,000 or less, and still more preferably 80,000 or greater and 200,000 or less.
[37] The resin composition according to any one of [30] to [36], in which a mass ratio of the (meth)acrylic polymer (M) to the copolymer is preferably in a range of 40:60 to 90:20, more preferably in a range of 50:50 to 80:20, and still more preferably in a range of 60:40 to 75:25.
[38] A molded product which is obtained by subjecting the resin composition according to any one of [30] to [37] to injection molding or extrusion molding.
[39] A filmy molded product which is obtained by subjecting the resin composition according to any one of [30] to [37] to extrusion molding.

### [Advantageous Effects of Invention]

The resin composition of the present invention contains the copolymer of the present invention as a constituent component and thus has excellent melt moldability.

Further, the molded product of the present invention is obtained by molding the resin composition and thus has excellent impact resistance and excellent transparency in a wide use temperature range.

### [Description of Embodiments]

Hereinafter, embodiments for carrying out the present invention (hereinafter, referred to as "present embodiment") will be described in detail, but the present invention is not limited to the following description and various modifications can be made within a range varies within the scope of the gist thereof.

In the present invention, "(meth)acrylic acid" denotes at least one selected from "acrylic acid" and "methacrylic acid". Further, the (meth)acrylate denotes methacrylate or acrylate.

In the present invention, "monomer" denotes an unpolymerized compound, and "repeating unit" and "structural unit" denote a constitutional unit constituting a polymer derived from a monomer formed by polymerizing the monomer. Further, a constitutional unit constituting a polymer denotes "monomer unit". Further, "repeating unit" or "structural unit" may be a unit directly formed by a polymerization reaction or a part of the unit that is converted into another structure by treating a polymer.

In the present invention, "% by mass" denotes the content ratio of a specific component to 100% by mass of the total amount of a substance.

In the present invention, a numerical range shown using "to" in the present specification denotes a range including the numerical values described before and after "to" as the lower limit and the upper limit and "A to B" denotes A or greater and B or less, unless otherwise specified.

### [Copolymer]

According to a first embodiment of the present invention, a copolymer is a copolymer (1) which has a mass average molecular weight (Mw) of 240,000 or greater and 3,500,000 or less, a structural unit derived from an acrylate (B1) and a structural unit derived from aromatic vinyl (B2), and a branched structure.

From the viewpoint of enhancing the impact resistance of a molded product (hereinafter, referred to as "obtained molded product" or simply referred to as "molded product") obtained by molding a resin composition (hereinafter, referred to as "obtained resin composition" or simply referred to as "resin composition") obtained by mixing the copolymer (1) and a (meth)acrylic polymer (M) described below, the lower limit of the mass average molecular weight (Mw) of the copolymer (1) of the present invention is 240,000 or greater. The lower limit thereof is preferably 300,000 or greater and more preferably 600,000 or greater. Meanwhile, the upper limit of Mw of the copolymer (1) of the present invention is 3,500,000 or less from the viewpoint that the handleability of the resin composition is enhanced. The upper limit thereof is preferably 3,000,000 or less and more preferably 2,000,000 or less. The upper limit and the lower limit described above can be arbitrarily combined.

Alternatively, the Mw of the copolymer (1) of the present invention is 240,000 of greater and 3,500,000 or less, preferably 300,000 or greater and 3,000,000 or less, and more preferably 600,000 or greater and 2,000,000 or less.

In the present invention, the mass average molecular weight (Mw) of the copolymer (1) and a copolymer (2) described below is a mass average molecular weight acquired as a relative molecular weight of the copolymers and is acquired by using gel permeation chromatography (GPC). A calibration curve used to acquire the relative molecular weight is created by using a standard polymer with a known peak molecular weight. It is preferable that a type of polymer having properties close to the properties of a polymer to be measured is used as the standard polymer and that a calibration curve for measurement of the copolymer is created by using 5 to 10 kinds of polymethyl methacrylates having known peak molecular weights. It is preferable to use a differential refractometer (RI) as a detector.

Further, since the copolymer (1) of the present invention has a structural unit derived from the acrylate (B1) and a structural unit derived from the aromatic vinyl (B2), the impact resistance of the obtained molded product can be more excellent. Further, the details of the acrylate (B1) and the aromatic vinyl (B2) will be described below.

Further, the copolymer (1) of the present invention has a branched structure in a molecule, and thus the impact resistance of the obtained molded product can be more excellent.

The branched structure in the copolymer (1) is formed in the obtained copolymer by subjecting a terminal double bond group of the macromonomer (A) and the acrylate (B1) or the aromatic vinyl (B2) to a copolymerization reaction according to the reaction mechanism during the copolymerization of the macromonomer (A) and the comonomer as described in the report written by Yamada et al. (Prog. Polym. Sci. 31 (2006) pp. 835 to 877).

That is, the copolymer (1) of the present invention which has a three-pronged branched point connected to a branched chain (branched structure) in the main chain (main chain structure) can be obtained by reacting the terminal double bond group of the macromonomer (A) with the acrylate (B1) or the aromatic vinyl (B2). Further, in the copolymer (1) of the present invention, a branched structure is generated by being derived from the macromonomer (A), and the main chain is formed by being derived from the acrylate (B1) or the aromatic vinyl (B2) that reacts with the macromonomer.

In the copolymer (1), the structural unit derived from the acrylate (B1) and the structural unit derived from the aromatic vinyl (B2) may be contained in the main chain or the branched chain or may be contained in both the main chain and the branched chain.

Further, in the copolymer (1) of the present invention, the branched structure may include a structural unit derived from the acrylate (B1) and a structural unit derived from the aromatic vinyl (B2). Since the branched structure includes the structural unit derived from the acrylate (B1) and the structural unit derived from the aromatic vinyl (B2), the impact resistance of the obtained molded product and the transparency in a wide use temperature range can be more excellent.

Further, in the copolymer (1) of the present invention, from the viewpoint that the impact resistance of the obtained molded product and the transparency in a wide use temperature range can be more excellent, it is preferable that at least one structural unit among three structural units bonded to the three-pronged branched point is a structural unit derived from the acrylate (B1) or a structural unit derived from the aromatic vinyl (B2). It is more preferable that two structural units among the three structural units are structural units derived from the acrylate (B1) or structural units derived from the aromatic vinyl (B2) and still more preferable that all the three structural units are structural units derived from the acrylate (B1) or structural units derived from the aromatic vinyl (B2).

Further, in the copolymer (1) of the present invention, it is preferable that the three-pronged branched point is formed of a structural unit derived from a methacrylate.

The copolymer (1) of the present invention can have a structural unit derived from the macromonomer (A) represented by General Formula (1).

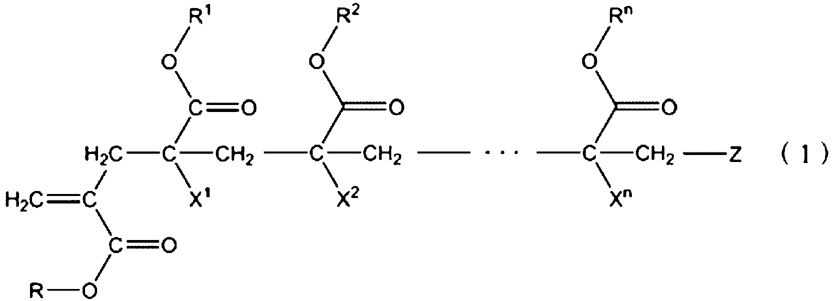

In Formula (1), R and R¹ to Rⁿ each independently represent a hydrogen atom, an alkyl group, a cycloalkyl group, an aryl group, or a heterocyclic group, X¹ to Xⁿ each independently represent a hydrogen atom or a methyl group, Z represents a terminal group, and n represents a natural number of 2 to 10,000.

Since the copolymer of the present invention has the macromonomer (A) unit represented by General Formula (1), the impact resistance and transparency of the obtained molded product can be more excellent. Further, the details of the macromonomer (A) will be described below.

Further, when the copolymer (1) of the present invention has a structural unit derived from the macromonomer (A) represented by General Formula (1), the copolymer (1) of the present invention may contain the unreacted macromonomer (A) during the production of the copolymer (1), a polymer consisting only of the acrylate (B1) unit, or a polymer consisting only of the aromatic vinyl (B2) unit.

The copolymer (1) of the present invention can be obtained by polymerizing the polymerizable composition (X) described below, which contains the macromonomer (A), the acrylate (B1), and the aromatic vinyl (B2).

According to a second embodiment of the present invention, the copolymer is a copolymer (2) which has a structural unit derived from the following macromonomer (A) represented by General Formula (1) (hereinafter, referred to as "macromonomer (A) unit") and a structural unit derived from the following comonomer (B) that is copolymerizable with the macromonomer (A) (hereinafter, referred to as "comonomer (B) unit").

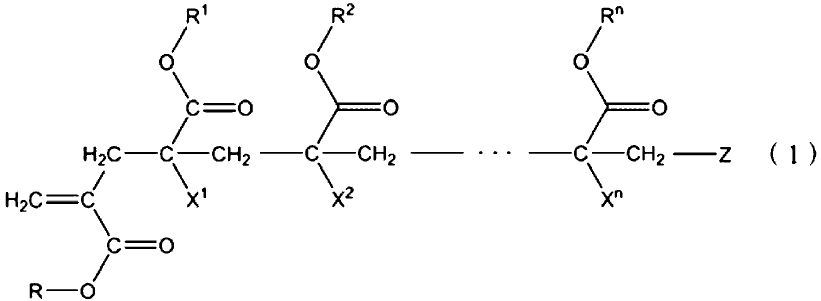

In Formula (1), R and R¹ to Rⁿ each independently represent a hydrogen atom, an alkyl group, a cycloalkyl group, an aryl group, or a heterocyclic group, X¹ to Xⁿ each independently represent a hydrogen atom or a methyl group, Z represents a terminal group, and n represents a natural number of 2 to 10,000.

The copolymer (2) of the present invention contains the macromonomer (A) unit, and thus the impact resistance and the transparency of the obtained molded product can be more excellent. Further, the details of the macromonomer (A) will be described below.

Further, the copolymer (2) of the present invention contains the comonomer (B) unit, and thus the impact resistance of the obtained molded product can be more excellent. Further, the details of the comonomer (B) will be described below.

Further, the copolymer (2) of the present invention may contain an unreacted macromonomer (A) during the production of the copolymer (2) and a polymer consisting only of the comonomer (B) unit.

The copolymer (2) of the present invention can be obtained by polymerizing the polymerizable composition (X) described below, which contains the macromonomer (A) and the comonomer (B).

From the viewpoint of enhancing the impact resistance of a molded product (hereinafter, referred to as "obtained molded product" or simply referred to as "molded product") obtained by molding a resin composition (hereinafter, referred to as "obtained resin composition" or simply referred to as "resin composition") obtained by mixing the copolymer (2) and a (meth)acrylic polymer (M) described below, the lower limit of the mass average molecular weight (Mw) of the copolymer (2) of the present invention is 240,000 or greater. The lower limit thereof is preferably 300,000 or greater and more preferably 600,000 or greater. Meanwhile, the upper limit of Mw of the copolymer (2) of the present invention is 3,500,000 or less from the viewpoint that the handleability of the resin composition is enhanced. The upper limit thereof is preferably 3,000,000 or less and more preferably 2,000,000 or less. The upper limit and the lower limit described above can be arbitrarily combined.

Alternatively, the Mw of the copolymer (2) of the present invention is 240,000 or greater and 3,500,000 or less, preferably 300,000 or greater and 3,000,000 or less, and more preferably 600,000 or greater and 2,000,000 or less.

### [Resin composition]

The resin composition of the present invention is a resin composition containing the (meth)acrylic polymer (M) described below and the copolymer (1) or the copolymer (2) of the present invention (hereinafter, simply referred to as "copolymer").

Further, the resin composition of the present invention may contain other components (Q) described below as necessary.

The proportion of the (meth)acrylic polymer (M) contained in the resin composition is preferably in a range of 10% to 99% by mass, more preferably in a range of 20% to 98% by mass, and still more preferably in a range of 50% to 90% by mass with respect to 100% by mass of the total mass of the resin composition.

When the lower limit of the proportion of the (meth)acrylic polymer (M) contained in the resin composition is 10% by mass of greater, the characteristics of the acrylic resin in the molded product obtained by molding the resin composition, such as the transparency, the weather resistance, a high elastic modulus, and the surface hardness are enhanced. When the upper limit of the proportion of the (meth)acrylic polymer (M) is 99% by mass or less, the melt moldability of the resin composition is enhanced, and the characteristics of the molded product obtained by molding the resin composition, such as the impact resistance and the transparency in a wide use temperature range are enhanced.

The proportion of the copolymer contained in the resin composition is preferably in a range of 1 % to 90% by mass, more preferably in a range of 2% to 80% by mass, and still more preferably in a range of 10% to 50% by mass with respect to 100% by mass of the total mass of the resin composition.

When the lower limit of the proportion of the copolymer contained in the resin composition is 1% by mass or greater, the melt moldability of the resin composition is enhanced, and the characteristics of the molded product obtained by molding the resin composition, such as the impact resistance and the transparency in a wide use temperature range are enhanced. When the upper limit of the proportion of the copolymer is 90% by mass or less, the characteristics of the acrylic resin in the molded product obtained by molding the resin composition, such as the transparency, the weather resistance, a high elastic modulus, and the surface hardness can be favorably maintained.

The proportion of the copolymer can be appropriately optimized depending on the elastic modulus and the impact resistance required for the molded product.

The mass ratio of the (meth)acrylic polymer (M) to the copolymer is preferably in a range of 10:90 to 99:1, more preferably in a range of 20:80 to 98:2, and still more preferably in a range of 50:50 to 90:10.

Further, the resin composition of the present invention can contain other components (Q) described below as necessary within a range where the effects of the present invention are not impaired.

The proportion of other components (Q) is not particularly limited as long as the effects of the present invention are not impaired. Typically, the proportion thereof is preferably in a range of 0% to 20% by mass and more preferably in a range of 0.1% to 5% by mass with respect to 100% by mass of the total mass of the resin composition.

Since the resin composition of the present invention has the above-described structure, the melt flow rate (MFR) at a temperature of 230°C and a load of 37.3 N is larger than that of the (meth)acrylic polymer (M) alone, and the melt moldability is excellent due to an excellent fluidity of greater than 2.0 g/10 min. As a result, the resin composition is suitable as a molding material for producing a molded product having a small thickness or a molded product having a complicated shape.

As a result, the resin composition of the present invention is suitable as a molding material used for known melt molding such as injection molding, extrusion molding, compression molding, or hollow molding. In particular, the resin composition of the present invention is suitable as a molding material used for injection molding or extrusion molding. Further, the resin composition is suitable as a molding material used for extrusion molding of a filmy molded product.

### [Method for producing resin composition]

The resin composition of the present invention can be obtained by a method for kneading the (meth)acrylic polymer (M), the copolymer, and other components (Q) added as necessary using a known physical mixing method such as a Henschel mixer or a blender or a known melt mixing method such as an extruder to obtain a resin composition.

When the obtained resin composition is obtained in the form of pellets, the workability for performing the melt molding after obtaining the resin composition and obtaining a molded product is enhanced.

Such a resin composition can be produced, for example, by mixing the above-described copolymer of the present invention with the (meth)acrylic polymer (M).

### [(Meth)acrylic polymer (M)]

The (meth)acrylic polymer (M) is one of the constituent components of the resin composition of the present invention.

The (meth)acrylic polymer (M) contains 80% by mass or greater of the MMA unit (hereinafter, methyl methacrylate may be abbreviated as MMA) with respect to 100% by mass of the total weight of the (meth)acrylic polymer (M).

When the lower limit of the proportion of the MMA unit of the (meth)acrylic polymer (M) is 80% by mass or greater with respect to 100% by mass of the total mass of the (meth)acrylic polymer (M), the heat resistance, the hardness, the scratch resistance, the weather resistance, the transparency, and the processability of the (meth)acrylic polymer can be favorably maintained. Meanwhile, the upper limit of the proportion of the MMA unit is not particularly limited, and a homopolymer of MMA (the proportion of the MMA unit is 100% by mass) may be adopted.

The (meth)acrylic polymer (M) may have, in addition to the MMA unit, a repeating unit derived from other comonomers copolymerizable with MMA (hereinafter, referred to as "comonomer unit") for various purposes.

When the (meth)acrylic polymer (M) has the above-described acrylate unit as the comonomer unit, the above-described acrylate unit as the comonomer unit in the (meth)acrylic polymer (M), depolymerization of the (meth)acrylic polymer (M) when exposed to high temperature conditions is suppressed, and thus the resistance to thermal decomposition can be improved.

Further, the functions of the (meth)acrylic polymer (M), such as the glass transition temperature (Tg), the processability, the heat resistance, the refractive index, the weather resistance, the release properties, and the resistance to thermal decomposition of the (meth)acrylic polymer (M) can be controlled by adjusting the kind or the proportion of the comonomer unit.

From the viewpoint of favorably maintaining the performance such as the heat resistance, the hardness, the scratch resistance, the weather resistance, the transparency, or the processability of the (meth)acrylic polymer, the upper limit of the proportion of the comonomer unit in the (meth)acrylic polymer (M) is preferably 20% by mass or less with respect to 100% by mass of the total mass of the (meth)acrylic polymer (M). Meanwhile, the lower limit of the proportion of the comonomer unit is not particularly limited, and a homopolymer having no comonomer unit, that is, MMA may be adopted.

Examples of the comonomer forming the comonomer unit of the (meth)acrylic polymer (M) include the following a) to i).
a) a (meth)acrylate ester monomer other than methyl methacrylate, such as methyl acrylate, ethyl (meth)acrylate, n-propyl (meth)acrylate, i-propyl (meth)acrylate, n-butyl (meth)acrylate, i-butyl (meth)acrylate, t-butyl (meth)acrylate, 2-ethylhexyl (meth)acrylate, n-lauryl (meth)acrylate, n-stearyl (meth)acrylate, cyclohexyl (meth)acrylate, phenyl (meth)acrylate, benzyl (meth)acrylate, isobornyl (meth)acrylate, 2-methoxyethyl (meth)acrylate, 2-ethoxyethyl (meth)acrylate, or phenoxyethyl (meth)acrylate,
b) a hydroxyl group-containing (meth)acrylate monomer such as 2-hydroxyethyl (meth)acrylate, 2-hydroxypropyl (meth)acrylate, 4-hydroxybutyl (meth)acrylate, or glycerol (meth)acrylate,
c) a carboxyl group-containing vinyl-based monomer such as (meth)acrylic acid, 2-(meth)acryloyloxyethylhexahydrophthalic acid, 2-(meth)acryloyloxypropylhexahydrophthalic acid, 2-(meth)acryloyloxyethylphthalic acid, 2-(meth)acryloyloxypropylphthalic acid, 2-(meth)acryloyloxyethylmaleic acid, 2-(meth)acryloyloxypropylmaleic acid, 2-(meth)acryloyloxyethylsuccinic acid, 2-(meth)acryloyloxypropylsuccinic acid, crotonic acid, fumaric acid, maleic acid, itaconic acid, monomethyl maleate, or monomethyl itaconate,
d) an acid anhydride group-containing vinyl-based monomer such as maleic anhydride or itaconic anhydride,
e) an epoxy group-containing vinyl-based monomer such as glycidyl (meth)acrylate, glycidyl α-ethyl acrylate, or 3,4-epoxybutyl (meth)acrylate,
f) an amino group-containing (meth)acrylate-based vinyl-based monomer such as dimethylaminoethyl (meth)acrylate or diethylaminoethyl (meth)acrylate,
g) a vinyl-based monomer containing an amide group, such as (meth)acrylamide, N-t-butyl (meth)acrylamide, N-methylol (meth)acrylamide, N-methoxymethyl (meth)acrylamide, N-butoxymethyl (meth)acrylamide, diacetone acrylamide, maleic acid amide, or maleimide,
h) a vinyl-based monomer such as styrene, α-methylstyrene, vinyltoluene, (meth)acrylonitrile, vinyl chloride, vinyl acetate, or vinyl propionate, and
i) a polyfunctional vinyl-based monomer such as divinylbenzene, ethylene glycol di(meth)acrylate, 1,3-butylene glycol di(meth)acrylate, 1,6-hexanediol di(meth)acrylate, triethylene glycol di(meth)acrylate, tetraethylene glycol di(meth)acrylate, tripropylene glycol di(meth)acrylate, trimethylolpropane tri(meth)acrylate, allyl (meth)acrylate, or N,N'-methylene bis(meth)acrylamide

These can be used alone or in combination of two or more kinds thereof.

Among these, from the viewpoint of the availability of monomers, methyl acrylate, ethyl (meth)acrylate, n-butyl (meth)acrylate, and 2-ethylhexyl (meth)acrylate are preferable, and methyl acrylate is more preferable.

The mass average molecular weight (Mw) of the (meth)acrylic polymer (M) in the present invention is not particularly limited, but is preferably 30,000 or greater and 1,000,000 or less, more preferably 50,000 or greater and 500,000 or less, and still more preferably 80,000 or greater and 200,000 or less. When the lower limit of Mw of the (meth)acrylic polymer (M) is 30,000 or greater, the performance of the (meth)acrylic polymer, such as the heat resistance, the hardness, the scratch resistance, the weather resistance, or the transparency is likely to be further exhibited. Further, when the upper limit of Mw of the (meth)acrylic polymer (M) is 1,000,000 or less, the melt viscosity is within an appropriate range, and the melt-kneadability and the processability are enhanced.

### [Macromonomer (A)]

The macromonomer (A) is one of the monomer raw materials forming the copolymer of the present invention, is represented by General Formula (1), and contains an unsaturated double bond group radically polymerizable with at one terminal of a poly (meth)acrylate segment.

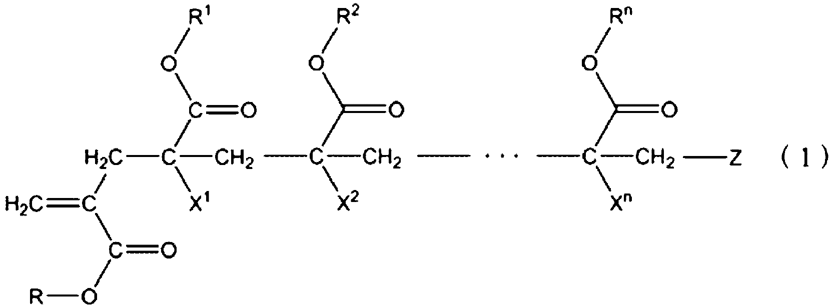

(In Formula (1), R and R¹ to Rⁿ each independently represent a hydrogen atom, an alkyl group, a cycloalkyl group, an aryl group, or a heterocyclic group. X¹ to Xⁿ each independently represent a hydrogen atom or a methyl group. Z represents a terminal group. n represents a natural number of 2 to 10,000.)

Since the copolymer of the present invention has the macromonomer (A) unit, the compatibility between the copolymer and the (meth)acrylic polymer (M) during the production of the resin composition of the present invention is enhanced. As a result, the impact resistance and the transparency of the obtained molded product are excellent. The compatibility between the copolymer and the (meth)acrylic polymer (M) can be improved by designing the kinds of the monomer units constituting each of the macromonomer (A) and the (meth)acrylic polymer (M) and the compositional ratios of each of the monomer units to be similar to each other.

### [R and R¹ to Rⁿ in Formula (1)]

In General Formula (1), the alkyl group, the cycloalkyl group, the aryl group, or the heterocyclic group as R and R¹ to Rⁿ can have a substituent.

Examples of the alkyl group as R and R¹ to Rⁿ include a branched or linear alkyl group having 1 to 20 carbon atoms. Specific examples thereof include a methyl group, an ethyl group, an n-propyl group, an i-propyl group, an n-butyl group, an i-butyl group, a t-butyl group, a pentyl group, a hexyl group, a heptyl group, an octyl group, a nonyl group, a decyl group, an undecyl group, a dodecyl group, a tridecyl group, a tetradecyl group, a pentadecyl group, a hexadecyl group, a heptadecyl group, an octadecyl group, a nonadecyl group, and an icosyl group. Among these, from the viewpoint of the availability, a methyl group, an ethyl group, an n-propyl group, an i-propyl group, an n-butyl group, a t-butyl group, a pentyl group, a hexyl group, a heptyl group, and an octyl group are preferable, a methyl group, an ethyl group, an n-propyl group, an i-propyl group, an n-butyl group, and a t-butyl group are more preferable, and a methyl group is particularly preferable.

Examples of the cycloalkyl group as R and R¹ to Rⁿ include a cycloalkyl group having 3 to 20 carbon atoms. Specific examples thereof include a cyclopropyl group, a cyclobutyl group, a cyclopentyl group, a cyclohexyl group, a cycloheptyl group, a cyclooctyl group, a t-butylcyclohexyl group, an isobornyl group, and an adamantyl group. From the viewpoint of availability, a cyclopropyl group, a cyclobutyl group, and an adamantyl group are preferable.

Examples of the aryl group as R and R¹ to Rⁿ include an aryl group having 6 to 18 carbon atoms. Specific examples thereof include a phenyl group, a benzyl group, and a naphthyl group.

Examples of the heterocyclic group as R and R¹ to Rⁿ include a heterocyclic group having 5 to 18 carbon atoms. Specific examples thereof include a γ-lactone group, an ε-caprolactone group, and a morpholine group. Examples of the heteroatom in a heterocyclic ring include an oxygen atom, a nitrogen atom, and a sulfur atom.

The substituents of R or R¹ to Rⁿ are each independently a group or an atom selected from the group consisting of an alkyl group, an aryl group, a carboxy group, an alkoxycarbonyl group (-COOR'), a carbamoyl group (-CONR'R"), a cyano group, a hydroxy group, an amino group, an amide group (-NR'R"), a halogen atom, an allyl group, an epoxy group, an alkoxy group (-OR'), and a group exhibiting hydrophilicity or ionicity. Further, R' and R" each independently have the same definition as that for R (excluding a heterocyclic group).

Examples of the alkoxycarbonyl group as a substituent of R or R¹ to Rⁿ include a methoxycarbonyl group.

Examples of the carbamoyl group as a substituent of R or R¹ to Rⁿ include a N-methylcarbamoyl group and a N,N-dimethylcarbamoyl group.

Examples of the amide group as a substituent of R or R¹ to Rⁿ include a dimethylamide group.

Examples of the halogen atom as a substituent of R or R¹ to Rⁿ include a fluorine atom, a chlorine atom, a bromine atom, and an iodine atom.

Examples of the alkoxy group as a substituent of R or R¹ to Rⁿ include an alkoxy group having 1 to 12 carbon atoms. Specific examples thereof include a methoxy group.

Examples of the group exhibiting hydrophilicity of ionicity as a substituent of R or R¹ to Rⁿ include cationic substituents such as an alkali salt of a carboxy group, an alkali salt of a sulfoxyl group, a poly(alkylene oxide) group such as polyethylene oxide group or a polypropylene oxide group, and a quaternary ammonium base.

R and R¹ to Rⁿ represent preferably at least one selected from an alkyl group and a cycloalkyl group and more preferably an alkyl group.

As the alkyl group, a methyl group, an ethyl group, an n-propyl group, or an i-propyl group is preferable, and a methyl group is more preferable from the viewpoint of availability.

### [X¹ to Xⁿ in Formula (1)]

In General Formula (1), it is preferable that 80 mol% or greater of X¹ to Xⁿ represent a methyl group with respect to 100 mol% of the total mol number of X¹ to Xⁿ from the viewpoint of easily synthesizing the macromonomer (A).

### [Z in Formula (1)]

In General Formula (1), Z represents a terminal group of the macromonomer (A). Examples of the terminal group of the macromonomer (A) include a hydrogen atom and a group derived from a radical polymerization initiator, similarly to the terminal group of a polymer obtained by known radical polymerization.

The lower limit of the proportion of the MMA unit in the macromonomer (A) is not particularly limited, and when the proportion thereof is 80% by mass or greater with respect to 100% by mass of the total mass of the macromonomer (A), the impact resistance and the transparency of the molded product (hereinafter, referred to as "obtained molded product" or simply referred to as "molded product") obtained by molding the resin composition are enhanced. The lower limit of the proportion of the MMA unit is preferably 80% by mass or greater, more preferably 90% by mass or greater, and still more preferably 95% by mass or greater. Meanwhile, the upper limit of the proportion of the MMA unit is not particularly limited and may be 100% by mass of the MMA unit or may be set to 99% by mass or less with respect to 100% by mass of the total mass of the macromonomer (A).

The lower limit of the proportion of the macromonomer (A) unit in the copolymer of the present invention is not particularly limited, but is preferably 35% by mass or greater, more preferably 40% by mass or greater, still more preferably 45% by mass or greater, particularly preferably 50% by mass or greater, and most preferably 55% by mass or greater with respect to 100% by mass of the total mass of the copolymer from the viewpoint of enhancing the handleability of the copolymer. Meanwhile, the upper limit of the proportion of the macromonomer (A) unit is not particularly limited, but is preferably 75% by mass or less, more preferably 70% by mass or less, and still more preferably 65% by mass or less with respect to 100% by mass of the total mass of the copolymer from the viewpoint of suppressing the amount of the copolymer to be used and obtaining the modification effect with a small addition amount. The upper limit and the lower limit described above can be arbitrarily combined.

Alternatively, the proportion of the macromonomer (A) unit in the copolymer of the present invention can be set to 35% by mass or greater and 75% by mass or less with respect to 100% by mass of the total mass of the copolymer. The proportion thereof is more preferably 40% by mass or greater and 70% by mass or less, still more preferably 45% by mass of greater and 70% by mass or less, particularly preferably 50% by mass or greater and 65% by mass or less, and most preferably 55% by mass or greater and 65% by mass or less.

The macromonomer (A) in the copolymer of the present invention adjusts the compatibility between the copolymer and the (meth)acrylic polymer (M) and thus can have a repeating unit derived from methacrylate (hereinafter, referred to as "methacrylate unit") other than the MMA unit. Alternatively, the macromonomer (A) in the copolymer of the present invention improves the resistance to thermal decomposition of the copolymer and thus can contain a repeating unit derived from an acrylate (hereinafter, referred to as "acrylate unit").

The details of the methacrylate unit and the acrylate unit will be described below.

From the viewpoint of enhancing the resistance to thermal decomposition of the copolymer, the lower limit of the proportion of the acrylate unit in the macromonomer (A) is preferably 0.5% by mass or greater, more preferably 2% by mass or greater, and still more preferably 4% by mass or greater with respect to 100% by mass of the total mass of the macromonomer (A). Meanwhile, from the viewpoint of favorably maintaining the resistance to thermal decomposition of the resin composition, the upper limit of the proportion of the acrylate unit is preferably 20% by mass or less, more preferably 10% by mass or less, and still more preferably 5% by mass or less with respect to 100% by mass of the total mass of the macromonomer (A).

The monomer constituting the methacrylate unit or the acrylate unit is not particularly limited as long as the monomer is copolymerizable with methyl methacrylate, and for example, the same monomers as the monomers exemplified in the section of "comonomer forming the comonomer unit of the (meth)acrylic polymer" described above can be used. These can be used alone or in combination of two or more kinds thereof.

Among these, n-butyl methacrylate and 2-ethylhexyl methacrylate are more preferable as the monomer constituting the methacrylate unit.

Among these, from the viewpoint of availability, methyl acrylate, ethyl acrylate, and n-butyl acrylate are preferable as the monomer constituting the acrylate unit.

The impact resistance of the obtained molded product can be further enhanced by adjusting the molecular weight of the polymer chain to the extent that the polymer chain consisting of the macromonomer (A) in the copolymer and the (meth)acrylic polymer (M) are entangled with each other during the production of the resin composition of the present invention by mixing the copolymer of the present invention with the (meth)acrylic polymer (M).

Here, it is known that the molecular weight Me between the entanglement points of polymethyl methacrylate is approximately 9,200 g/mol (report written by Wu et al.: POLYMER ENGINEERING AND SCIENCE, JUNE 1992, Vol. 32, No. 12, p. 823).

Therefore, from the viewpoint that the impact resistance of the obtained molded product can be more excellent due to the entanglement between the polymer chain consisting of the macromonomer (A) unit and the (meth)acrylic polymer (M) and the improvement of the interfacial strength between the copolymer and the matrix phase formed of the (meth)acrylic polymer (M), the lower limit of the mass average molecular weight (Mw) of the macromonomer (A) can be set to 10,000 or greater. The lower limit thereof is more preferably 12,000 or greater, still more preferably 15,000 or greater, and particularly preferably 20,000 or greater. Meanwhile, from the viewpoint of enhancing the copolymerizability of the macromonomer (A) and the copolymer (B) and favorably maintaining the impact resistance of the obtained molded product, the upper limit of the mass average molecular weight (Mw) of the macromonomer (A) can be set to 1,000,000 or less. The upper limit thereof is more preferably 80,000 or less, still more preferably 60,000 or less, and particularly preferably 40,000 or less. The upper limit and the lower limit described above can be arbitrarily combined.

Alternatively, the mass average molecular weight (Mw) of the macromonomer (A) can be set to 10,000 or greater and 100,000 or less. The mass average molecular weight thereof is more preferably 12,000 or greater and 80,000 or less, still more preferably 15,000 or greater and 60,000 or less, and particularly preferably 20,000 or greater and 40,000 or less.

In the present invention, the mass average molecular weight (Mw) of the macromonomer (A) denotes the mass average molecular weight which is a relative molecular weight acquired using gel permeation chromatography (GPC) in terms of polymethyl methacrylate (PMMA).

The macromonomer (A) in the present invention may be a mixture of two or more kinds of macromonomers. In this case, the mass average molecular weight Mw is calculated as a value of the entire macromonomer (A). When a plurality of kinds of macromonomers (A) having different mass average molecular weights Mw are used in combination, the macromonomer (A) with a lower molecular weight plays a role of preventing a decrease in viscosity of the syrup and crosslinking of the copolymer, and the macromonomer (A) with a higher molecular weight plays a role of ensuring the compatibility with the matrix resin used as an additive.

### [Raw material monomer of macromonomer (A)]

Raw material monomers for producing the macromonomer (A) in the present invention include methyl methacrylate as an essential component and a monomer copolymerizable with methyl methacrylate as other components. As the monomer copolymerizable with methyl methacrylate, the same monomers as the monomers exemplified in the section of "comonomer forming the comonomer unit of the (meth)acrylic polymer (M)" described above can be used. These can be used alone or in combination of two or more kinds thereof.

Among these, from the viewpoint of the availability of monomers, methyl acrylate, n-butyl (meth)acrylate, lauryl (meth)acrylate, dodecyl (meth)acrylate, stearyl (meth)acrylate, 2-ethylhexyl (meth)acrylate, glycidyl (meth)acrylate, 2-hydroxyethyl (meth)acrylate, and 4-hydroxybutyl (meth)acrylate are preferable, and methyl acrylate, n-butyl (meth)acrylate, and 2-ethylhexyl (meth)acrylate are more preferable.

Further, from the viewpoint that the resistance to thermal decomposition is excellent, it is preferable that the copolymer of the present invention which is a product, the resin composition of the present invention which contains the copolymer, and the molded product of the present invention which is molded by using the resin composition partially contain an acrylate as the raw material monomer for producing the macromonomer (A).

Examples of the acrylate include methyl acrylate, ethyl acrylate, n-propyl acrylate, i-propyl acrylate, n-butyl acrylate, i-butyl acrylate, and t-butyl acrylate. Among these, methyl acrylate, ethyl acrylate, and n-butyl acrylate are preferable in terms of availability.

### [Comonomer (B)]

The comonomer (B) is one of the monomer raw materials forming the copolymer (2) of the present invention, and is a monomer having copolymerizability with the macromonomer (A) in the present invention.

When the copolymer of the present invention has the comonomer (B) unit, the impact resistance of the obtained molded product and the transparency in a wide use temperature range are enhanced.

The comonomer (B) unit in the present invention includes a repeating unit derived from the acrylate (B1) described below. Since the comonomer (B) unit includes the acrylate (B1) unit, the impact resistance of the obtained molded product is enhanced. Further, when the obtained molded product has a film shape, the flexibility is imparted to the film and the film is unlikely to be broken when repeatedly bent because the comonomer (B) unit includes the acrylate (B1) unit.

Further, the comonomer (B) unit in the present invention includes a repeating unit derived from the aromatic vinyl (B2) described below (hereinafter, referred to as "aromatic vinyl (B2) unit"). Since the comonomer (B) unit includes the aromatic vinyl (B2) unit, the refractive index of the polymer chain having the comonomer (B) unit is adjusted to the refractive index of the (meth)acrylic copolymer (M) blended with the copolymer, and the transparency of the obtained molded product in a wide use temperature range is enhanced.

Further, the comonomer (B) in the present invention may have a repeating unit derived from methacrylate (B3) described below (hereinafter, referred to as "methacrylate (B3) unit") or repeating units derived from other monomers (B4) described below (hereinafter, referred to as "other monomer (B4) units") as necessary.

The copolymerization reaction mechanism between the macromonomer (A) and the comonomer (B) is described in detail in the report written by Yamada et al. (Prog. Polym. Sci. 31 (2006) pp. 835 to 877). As the comonomer (B), a monomer having a double bond and having radical polymerizability can be used alone or in combination of two or more kinds thereof.

Further, from the viewpoint that the impact resistance of the obtained molded product can be more excellent, the glass transition temperature (Tg) of the polymer chain having the comonomer (B) unit in the copolymer is preferably lower than 0°C, more preferably -20°C or lower, still more preferably -30°C or lower, and particularly preferably -35°C or lower.

In the present invention, as the Tg of the polymer chain having the comonomer (B) unit, numerical values described in known documents such as POLYMER HANDBOOK FOURTH EDITION (2003) are adopted as the Tg of the homopolymer of the monomer used as the comonomer (B), and the Tg can be calculated by Fox Equation. Alternatively, the dynamic viscoelasticity of the obtained molded product is measured and the value of tan δ can be adopted as Tg.

The proportion (unit: % by mass) of the comonomer (B) unit in the copolymer of the present invention is preferably 25% by mass or greater and 65% by mass or less with respect to 100% by mass of the total mass of the copolymer. When the lower limit of the proportion of the comonomer (B) is 25% by mass or greater, the impact resistance improving effect of the copolymer is likely to be obtained. The lower limit of the proportion of the comonomer (B) is preferably 25% by mass or greater, more preferably 30% by mass of greater, still more preferably 35% by mass of greater. Meanwhile, when the upper limit of the proportion of the comonomer (B) is 65% by mass or less, the haze of the molded product when the copolymer is blended into the resin composition is enhanced. The upper limit of the proportion of the comonomer (B) is preferably 65% by mass or less, more preferably 60% by mass or less, still more preferably 55% by mass or less, particularly preferably 50% by mass or less, and most preferably 45% by mass or less.

The comonomer (B) is not particularly limited as long as the comonomer can be copolymerized with the macromonomer (A), and various polymerizable monomers can be used as necessary. Specifically, from the viewpoints of the reactivity with the macromonomer (A), formation of a branched structure, and adjustment of the refractive index, it is preferable to mainly use the acrylate (B1) described below and the aromatic vinyl (B2) described below. Further, the methacrylate (B3) described below and other monomers (B4) described below can be used as necessary.

### [Acrylate (B1)]

The comonomer (B) contains the acrylate (B1) having favorable copolymerizability with the macromonomer (A). Since the comonomer (B) contains the acrylate (B1), the impact resistance of the obtained molded product is enhanced.

The lower limit of the proportion of the acrylate (B1) contained in the comonomer (B) is preferably 70% by mass of greater, more preferably 79% by mass or greater, and still more preferably 81% by mass or greater with respect to 100% by mass of the total mass of the comonomer (B). When the lower limit of the proportion of the acrylate (B1) is 70% by mass or greater, the reactivity between the macromonomer (A) and the comonomer (B) is ensured, and the proportion of the block polymer or the graft polymer contained in the copolymer can be sufficiently increased. Meanwhile, when the proportion of the acrylate (B1) is low, the macromonomer (A) does not react sufficiently and remains unreacted, the molecular weight of the copolymer of the present invention does not sufficiently increase, or the reaction time until the copolymer of the present invention is obtained extremely increases in some cases.

The upper limit of the proportion of the acrylate (B1) contained in the comonomer (B) is not particularly limited, but is preferably less than 100% by mass, more preferably 95% by mass or less, and still more preferably 90% by mass or less with respect to 100% by mass of the total mass of the copolymer (B).

Further, from the viewpoint that the acrylate (B1) can make the impact resistance of the obtained molded product more excellent, the glass transition temperature (Tg) of the homopolymer of the acrylate (B1) is preferably lower than 0°C.

In the present invention, numerical values described in known documents such as POLYMER HANDBOOK FOURTH EDITION (2003) are adopted as the Tg of the homopolymer of the acrylate (B1), and the Tg can be calculated by Fox Equation.

Examples of the acrylate (B1) include an acrylate such as methyl acrylate, ethyl acrylate, n-propyl acrylate, i-propyl acrylate, n-butyl acrylate, i-butyl acrylate, t-butyl acrylate, 2-ethylhexyl acrylate, n-lauryl acrylate, n-stearyl acrylate, cyclohexyl acrylate, phenyl acrylate, benzyl acrylate, isobornyl acrylate, 2-methoxyethyl acrylate, 2-ethoxyethyl acrylate, or phenoxyethyl acrylate; hydroxyl group-containing acrylate such as 2-hydroxyethyl acrylate, 2-hydroxypropyl acrylate, 4-hydroxybutyl acrylate, or glycerol acrylate; carboxy group-containing acrylate such as 2-acryloyloxyethylhexahydrophthalic acid, 2-acryloyloxypropylhexahydrophthalic acid, 2-acryloyloxyethylphthalic acid, 2-acryloyloxypropylphthalic acid, 2-acryloyloxyethylmaleic acid, 2-acryloyloxypropylmaleic acid, 2-acryloyloxyethylsuccinic acid, or 2-acryloyloxypropylsuccinic acid; epoxy group-containing acrylate such as glycidyl acrylate, glycidyl α-ethyl acrylate, or 3,4-epoxybutyl acrylate; amino group-containing acrylate such as dimethylaminoethyl acrylate or diethylaminoethyl acrylate; and polyfunctional acrylate such as ethylene glycol diacrylate, 1,3-butylene glycol diacrylate, 1,6-hexanediol diacrylate, triethylene glycol diacrylate, tetraethylene glycol diacrylate, tripropylene glycol diacrylate, trimethylolpropane triacrylate, allyl acrylate, or N,N'-methylene bisacrylamide. These can be used alone or in combination of two or more kinds thereof.

Among the monomers described above, since the Tg of the homopolymer is lower than 0°C, 2-ethylhexyl acrylate, 4-hydroxybutyl acrylate, n-butyl acrylate, n-propyl acrylate, ethyl acrylate, and 2-hydroxyethyl acrylate are preferable. Alternatively, from the viewpoint of enhancing the compatibility between the macromonomer (A) and the comonomer (B) and enhancing the transparency and the impact resistance of the obtained molded product, methyl acrylate, ethyl acrylate, and n-butyl acrylate are preferable.

### [Aromatic vinyl (B2)]

The comonomer (B) in the present invention contains aromatic vinyl (B2) as an essential component.

It is known that since the progress of the copolymerization reaction between the aromatic vinyl (B2) and the macromonomer (A) is extremely slow, the aromatic vinyl (B2) is difficult to use alone as the comonomer (B). The copolymerization reaction mechanism is described in detail in the report written by Yamada et al. (Prog. Polym. Sci. 31 (2006) pp. 835 to 877).

However, as a result of intensive examination conducted by the present inventors, it was found that the copolymerization of the aromatic vinyl (B2) with the macromonomer (A) proceeds at a favorable reaction speed when the acrylate (B1) and the aromatic vinyl (B2) are combined and the conditions for the polymerization reaction are optimized. Further, the refractive index of the macromonomer (A) or the (meth)acrylic polymer (M) and the refractive index of the polymer chain consisting of the comonomer (B) can be made to coincide with each other by adjusting the compositional ratio between the acrylate (B1) and the aromatic vinyl (B2). In this manner, the transparency of the molded product consisting of the resin composition in a wide use temperature range is enhanced.

Even more surprisingly, an effect of making the copolymer difficult to crosslink is found when the polymerizable composition (X) is polymerized to obtain the copolymer, by using the aromatic vinyl (B2) as a part of the comonomer (B). In the related art, it is necessary to prevent crosslinking of the copolymer by the chain transfer effect of the macromonomer (A) and to use the macromonomer (A) having a low molecular weight in order to increase the mol% of the macromonomer (A) to be used. Therefore, the macromonomer (A) having a higher molecular weight can be used by using the aromatic vinyl (B2). It was found that the transparency of the molded product formed of the resin composition in a wide temperature range is further improved by using the macromonomer (A) having a higher molecular weight.

The proportion of the aromatic vinyl (B2) contained in the comonomer (B) is preferably in a range of 10% to 30% by mass, more preferably in a range of 13% to 21% by mass, and still more preferably in a range of 15% to 19% by mass with respect to 100% by mass of the total mass of the comonomer (B). When the proportion of the aromatic vinyl (B1) contained in the comonomer (B) is 10% by mass or greater, the macromonomer (A) having a large molecular weight can be used, and excellent transparency of the molded product formed of the resin composition can be exhibited in a wide temperature range. When the proportion of the aromatic vinyl (B1) contained in the comonomer (B) is 30% by mass or less, the polymerization reaction rate of the polymerizable composition (X) sufficiently increases.

Examples of the aromatic vinyl (B2) include styrene, α-methylstyrene, o-methylstyrene, p-methylstyrene, o-ethylstyrene, p-ethylstyrene, p-t-butylstyrene, vinyl ethyl benzene, vinyltoluene, vinylxylene, vinylnaphthalene, diphenylethylene, and divinylbenzene. Among these, styrene is preferable from the viewpoints of practical physical properties and productivity. These can be used alone or in combination of two or more kinds thereof.

### [Methacrylate (B3)]

The comonomer (B) of the present invention may contain methacrylate (B3) having favorable copolymerizability with the macromonomer (A) and the aromatic vinyl (B2).

Examples of the methacrylate (B3) include methacrylate such as methyl methacrylate, ethyl methacrylate, n-propyl methacrylate, i-propyl methacrylate, n-butyl methacrylate, i-butyl methacrylate, t-butyl methacrylate, 2-ethylhexyl methacrylate, n-lauryl methacrylate, n-stearyl methacrylate, cyclohexyl methacrylate, phenyl methacrylate, benzyl methacrylate, isobornyl methacrylate, 2-methoxyethyl methacrylate, 2-ethoxyethyl methacrylate, or phenoxyethyl methacrylate; hydroxyl group-containing methacrylate such as 2-hydroxyethyl methacrylate, 2-hydroxypropyl methacrylate, 4-hydroxybutyl methacrylate, or glycerol methacrylate; carboxy group-containing methacrylate such as 2-methacryloyloxyethylhexahydrophthalic acid, 2-methacryloyloxypropylhexahydrophthalic acid, 2-methacryloyloxyethylphthalic acid, 2-methacryloyloxypropylphthalic acid, 2-methylloyloxyethylmaleic acid, 2-methacryloyloxypropylmaleic acid, 2-methacryloyloxyethylsuccinic acid, or 2-methacryloxypropylsuccinic acid; epoxy group-containing methacrylate such as glycidyl methacrylate or 3,4-epoxybutyl methacrylate; amino group-containing methacrylate such as dimethylaminoethyl methacrylate or diethylaminoethyl methacrylate; and polyfunctional methacrylate such as ethylene glycol dimethacrylate, 1,3-butylene glycol dimethacrylate, 1,6-hexanediol dimethacrylate, triethylene glycol dimethacrylate, tetraethylene glycol dimethacrylate, tripropylene glycol dimethacrylate, trimethylolpropane trimethacrylate, and allyl methacrylate. Among these, one or more can be appropriately selected and used.

Since the methacrylate (B3) suppresses the copolymerization reaction between the macromonomer (A) and the comonomer (B) and disturbs generation of branched products, it is preferable that the amount of the methacrylate (B3) to be used is small. The content of the methacrylate (B3) is preferably 20% by mass or less, more preferably 10% by mass or less, and still more preferably 5% by mass or less with respect to 100% by mass of the total amount of the comonomer (B), and the methacrylate (B3) may not be used.

### [Other monomers (B4)]

The comonomer (B) of the present invention may contain other monomers (B4) having favorable copolymerizability with the macromonomer (A) and the aromatic vinyl (B2), as necessary.

Examples of the other monomers (B4) include a carboxy group-containing vinyl-based monomer such as (meth)acrylic acid, crotonic acid, fumaric acid, maleic acid, itaconic acid, monomethyl maleate, or monomethyl itaconate; an acid anhydride group-containing vinyl-based monomer such as maleic anhydride or itaconic anhydride; a vinyl-based monomer containing an amide group, such as (meth)acrylamide, N-t-butyl (meth)acrylamide, N-methylol (meth)acrylamide, N-methoxymethyl (meth)acrylamide, N-butoxymethyl (meth)acrylamide, diacetone acrylamide, maleic acid amide, or maleimide; and a vinyl-based monomer such as (meth)acrylonitrile, vinyl chloride, vinyl acetate, or vinyl propionate. Among these, one or more can be appropriately selected and used. The content of the other monomers (B4) is preferably 20% by mass or less, more preferably 10% by mass or less, and still more preferably 5% by mass or less with respect to 100% by mass of the total amount of the comonomer (B), and the other monomers (B4) may not be used.

### [Method for producing macromonomer (A)]

The macromonomer (A) in the present invention can be produced by a known method. Examples of the method for producing the macromonomer (A) include a method for producing the macromonomer (A) using a cobalt chain transfer agent (United States Patent No. 4680352), a method of using an α-substituted unsaturated compound such as α-bromomethylstyrene as a chain transfer agent (PCT International Publication No. WO88/04304), a method for chemically bonding a polymerizable group (Japanese Unexamined Patent Application, First Publication No. 60-133007 and United States Patent No. 5147952), and a method for producing the macromonomer (A) by thermal decomposition (Japanese Unexamined Patent Application, First Publication No. 11-240854). Among these, the method for producing the macromonomer (A) by using a cobalt chain transfer agent is preferable from the viewpoint of using a catalyst in which the number of production steps is small and the chain transfer constant is large.

Examples of the method for producing the macromonomer (A) using a cobalt chain transfer agent include a block polymerization method, a solution polymerization method, and an aqueous dispersion polymerization method such as a suspension polymerization method or an emulsion polymerization method. Among these, from the viewpoint of simplifying a recovery step for the macromonomer (A), the aqueous dispersion polymerization method is preferable, and the suspension polymerization method is particularly preferable. Further, in a case of the solution polymerization method, the copolymer of the present invention can be obtained by the copolymerization reaction by additionally adding the comonomer (B) and a thermal polymerization initiator without recovering the macromonomer (A).

As the cobalt chain transfer agent used in the present invention, a cobalt chain transfer agent represented by General Formula (2) can be used, and for example, those described in Japanese Patent No. 3587530, Japanese Unexamined Patent Application, First Publication No. H6-23209, Japanese Unexamined Patent Application, First Publication No. H7-35411, United States Patent No. 45269945, United States Patent No. 4694054, United States Patent No. 4834326, United States Patent No. 4886861, United States Patent No. 5324879, PCT International Publication No. WO95/17435, and Published Japanese Translation No. H9-510499 can be used.

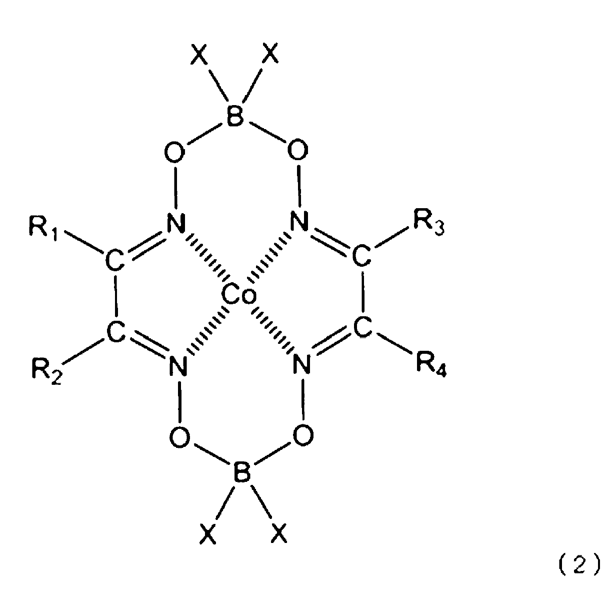

In Formula (2), R¹ to R⁴ each independently represent an alkyl group, a cycloalkyl group, or an aryl group, and X's each independently represent an F atom, a Cl atom, a Br atom, an OH group, an alkoxy group, an aryloxy group, an alkyl group, of an aryl group.

### [Method for producing copolymer]

A method for producing a copolymer of the present invention includes a step of subjecting a polymerizable mixture containing a polymerizable composition (X) described below and a polymerization initiator to a polymerization reaction.

The polymerizable composition (X) contains a macromonomer (A) represented by General Formula (1) and a comonomer (B) copolymerizable with the macromonomer (A).

The comonomer (B) contains an acrylate (B1) and aromatic vinyl (B2).

In addition, the comonomer (B) can contain methacrylate (B3) and other monomers (B4) as necessary.

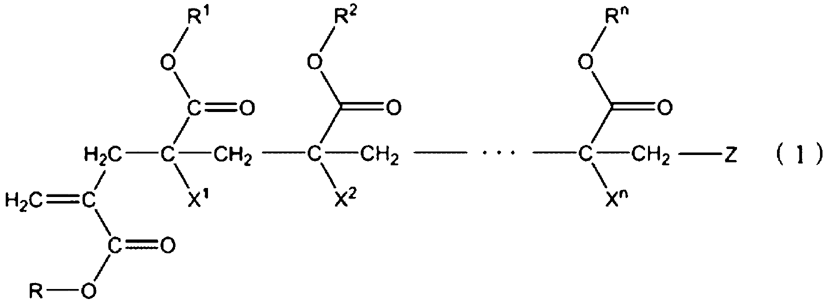

In Formula (1), R and R¹ to Rⁿ each independently represent a hydrogen atom, an alkyl group, a cycloalkyl group, an aryl group, or a heterocyclic group, X¹ to Xⁿ each independently represent a hydrogen atom or a methyl group, Z represents a terminal group, and n represents a natural number of 2 to 10,000.

In the method for producing the copolymer of the present invention, it is preferable that the polymerization reaction is carried out by using a radical polymerization method. Examples of the radical polymerization method include a bulk polymerization method such as a block polymerization method or a cast polymerization method, a solution polymerization method, and an aqueous dispersion polymerization method such as a suspension polymerization method or an emulsion polymerization method.

Among these, an aqueous dispersion polymerization method such as a suspension polymerization method or an emulsion polymerization method is preferable from the viewpoint of simplifying the recovery step of the copolymer, and a suspension polymerization method is more preferable from the viewpoint of favorable handleability of the obtained polymer particles.

In the suspension polymerization method, the copolymer is obtained as spherical particles having an average particle diameter of approximately 5 µm to 1 mm. The obtained spherical particles are suitable as the resin composition from the viewpoint that the handleability is favorable and dust scattering is less likely to occur when the obtained particles are used in processing operations such as extrusion and molding. Further, the moldability of the resin composition obtained by the suspension polymerization method is enhanced, which is preferable. The reason for this is not clear, but it is assumed that a trace amount of an abnormal polymer generated by emulsion polymerization and the remaining emulsifier cause foreign matter or an increase in thickness, and as a result, the suspension polymerization method is superior to the emulsion polymerization method.

The details of the suspension polymerization method will be described later.

Alternatively, in the production method of the present invention, the polymerization reaction is carried out by using a bulk polymerization method such as a block polymerization method or a cast polymerization method and can include a step of heating and polymerizing the polymerizable mixture.

Further, in a case of the solution polymerization method, the macromonomer (A) is produced by solution polymerization, and the comonomer (B) and the thermal polymerization initiator are additionally added to the solution as it is to carry out a copolymerization reaction to obtain the copolymer of the present invention.

In the production method of the present invention, the upper limit of the content of a sulfur-containing chain transfer agent contained in the polymerizable mixture is preferably less than 0.01 parts by mass with respect to 100 parts by mass of the polymerizable composition (X). When the upper limit of the content of the sulfur-containing chain transfer agent is less than 0.01 parts by mass, widening of the composition distribution of the copolymer can be suppressed, and thus the impact resistance of the obtained molded product can be enhanced. The lower limit of the content of the sulfur-containing chain transfer agent is not particularly limited, and it is more preferable that the polymerizable mixture does not contain the sulfur-containing chain transfer agent.

Further, the sulfur-containing chain transfer agent denotes a mercaptan compound such as n-butyl mercaptan or n-octyl mercaptan, which is added as a chain transfer agent to adjust the molecular weight of the copolymer during polymerization.

Further, in the method for producing the copolymer of the present invention, the polymerization can be carried out such that the mass average molecular weight (Mw) of the obtained copolymer is 240,000 or greater and 3,500,000 or less.

The lower limit of the mass average molecular weight (Mw) of the copolymer is preferably 240,000 or greater, more preferably 300,000 of greater, and still more preferably 600,000 or greater from the same viewpoint as described in the section of the copolymer of the present invention. Meanwhile, the upper limit of Mw of the copolymer is preferably 3,500,000 or less, more preferably 3,000,000 of less, and still more preferably 2,000,000 or less from the same viewpoint as described in the section of the copolymer of the present invention. The upper limit and the lower limit described above can be arbitrarily combined.

A method for controlling the mass average molecular weight (Mw) of the copolymer to 240,000 or greater is not particularly limited, but can be controlled by adjusting the polymerization method, the kind and the addition amount of the polymerization initiator, the addition amount of the chain transfer agent, the polymerization temperature, or the like according to a technique known by those skilled in the art.

### [Polymerizable composition (X)]

The polymerizable composition (X) is one of the raw materials for the resin composition of the present invention. The ratio of the proportion of the macromonomer (A) (A, unit: % by mass) to the proportion of the comonomer (B) (B, unit: % by mass) contained in the polymerizable composition (X) is preferably in a range of 35% to 75% by mass:65% to 25% by mass, more preferably in a range of 40% to 70% by mass:60% to 30% by mass, still more preferably in a range of 45% to 70% by mass:55% to 30% by mass, particularly preferably in a range of 50% to 65% by mass:50% to 35% by mass, and most preferably in a range of 55% to 65% by mass:45% to 35% by mass with respect to 100% by mass of the total mass of the polymerizable composition (X). The ratio of the proportion of the macromonomer (A) (A, unit: % by mass) to the proportion of the comonomer (B) (B, unit: % by mass) contained in the polymerizable composition (X) is preferably in a range of 35:65 to 75:25, more preferably in a range of 40:60 to 70:30, still more preferably in a range of 45:55 to 70:30% by mass, particularly preferably in a range of 50:50 to 65:35, and most preferably in a range of 55:45 to 65:35% by mass with respect to 100% by mass of the total mass of the polymerizable composition (X). When the lower limit of the proportion of the macromonomer (A) contained in the polymerizable composition (X) is 35% by mass or greater or when the upper limit of the proportion of the comonomer (B) is 65% by mass or less with respect to 100% by mass of the total mass of the polymerizable composition (X), the handleability of the copolymer is enhanced. Further, when the lower limit of the proportion of the comonomer (B) contained in the polymerizable composition (X) is 25% by mass or greater or when the upper limit of the proportion of the macromonomer (A) is 75% by mass or less with respect to 100% by mass of the total mass of the polymerizable composition (X), the impact resistance of the resin composition containing the copolymer and the obtained molded product can be favorably maintained.

### [Production of copolymer by suspension polymerization]

In the method for producing a copolymer of the present invention, a case where the polymerization reaction is carried out by the suspension polymerization method will be described in detail below.

In the method for producing the copolymer of the present invention, examples of the method for producing the copolymer of the present invention using the suspension polymerization method include a method for separately performing the method for producing the macromonomer (A) in the present invention and the method for producing the copolymer of the present invention including the following steps i) to v) and a method for continuously performing the method for producing the macromonomer (A) in the present invention and the method for producing the copolymer of the present invention including the following steps 1) and II) in place of the following steps i) and ii) among the following steps i) to v).

### i) Syrup preparation step

A syrup is prepared by dissolving a bead-like macromonomer (A) produced by suspension polymerization in a solution containing the comonomer (B) and used as the polymerizable composition (X).

During the preparation of the polymerizable composition (X), the mixture containing the macromonomer (A) and the comonomer (B) can be heated at a temperature lower than or equal to the boiling point of the comonomer (B) to promote dissolution of the macromonomer (A). The temperature at which the polymerizable composition (X) is prepared is preferably in a range of 20°C to 100°C and more preferably in a range of 40°C to 80°C. When the radical polymerization initiator used does not react at the temperature at which the polymerizable composition (X) is prepared, the radical polymerization initiator is mixed with the polymerizable composition (X) to obtain a polymerizable mixture, and the polymerizable mixture can be heated.

### ii) Radical polymerization initiator dissolution step

When the radical polymerization initiator reacts at the temperature at which the polymerizable composition (X) obtained in the step i) is prepared, the radical polymerization initiator is added after the polymerizable composition (X) is temporarily cooled to room temperature or lower, and the mixture is uniformly dissolved to obtain a polymerizable mixture. It is preferable that the temperature of the polymerizable composition (X) when the radical polymerization initiator is added is set to be lower than or equal to a temperature obtained by subtracting 15°C from a ten-hour half-life temperature of the radical polymerization initiator.

### iii) Aqueous solution preparation step

The polymerizable mixture and the aqueous solution are mixed and stirred to prepare a suspension in which liquid droplets of the polymerizable mixture are dispersed in the aqueous solution. The aqueous solution is an aqueous solution for dispersing the polymerizable mixture, and may contain a dispersant, an electrolyte, and other auxiliaries. The dispersibility of the liquid droplets of the polymerizable mixture formed in the aqueous solution when the polymerizable mixture is dispersed in the aqueous solution can be controlled by appropriately selecting a combination of the dispersant and the electrolyte.

As water used for the aqueous solution, deionized water is preferably used from the viewpoint of enhancing the dispersibility of the liquid droplets of the polymerizable mixture.

Examples of the dispersant include an alkali metal salt of poly(meth)acrylic acid, a copolymer of an alkali metal salt of (meth)acrylic acid and (meth)acrylic acid ester, a copolymer of an alkali metal salt of sulfoalkyl (meth)acrylate and (meth)acrylic acid ester, an alkali metal salt of polystyrene sulfonic acid, a copolymer of an alkali metal salt of styrene sulfonic acid and (meth)acrylic acid ester, and a copolymer formed of a combination of these monomers; and polyvinyl alcohol, methyl cellulose, starch, and hydroxyapatite with a saponification degree of 70% to 100%. These can be used alone or in combination of two or more kinds thereof. Among these, from the viewpoint of favorable dispersion stability during the suspension polymerization, a copolymer of an alkali metal salt of sulfoalkyl (meth)acrylate and (meth)acrylic acid ester and a copolymer of an alkali metal salt of (meth)acrylic acid and (meth)acrylic acid ester are preferable. The amount of the dispersant to be added is, for example, in a range of 0.0005 to 0.5 parts by mass with respect to 100 parts by mass of the polymerizable composition (X).

Examples of the electrolyte include sodium carbonate, sodium sulfate, and manganese sulfate. The amount of the electrolyte to be added is, for example, in a range of 0.01 to 1.0 parts by mass with respect to 100 parts by mass of the polymerizable composition (X).

### I) Syrup preparation step

A solution containing the comonomer (B) is added in a state where the macromonomer (A) on the beads produced by suspension polymerization is dispersed in an aqueous solution, thereby preparing the polymerizable composition (X). The temperature at which the macromonomer (A) is dissolved in the solution containing the comonomer (B) is preferably in a range of 20°C to 100°C, more preferably in a range of 40°C to 90°C, and still more preferably in a range of 50°C to 80°C.

### II) Radical polymerization initiator dissolution step

When the radical polymerization initiator reacts at the temperature at which the polymerizable composition (X) obtained in the step 1) is prepared, the radical polymerization initiator is added after the polymerizable composition (X) is temporarily cooled to room temperature or lower, and the mixture is uniformly dissolved to obtain a polymerizable mixture. It is preferable that the temperature of the polymerizable composition (X) when the radical polymerization initiator is added is set to be lower than or equal to a temperature obtained by subtracting 15°C from a ten-hour half-life temperature of the radical polymerization initiator.

### iv) Polymerization reaction step

Next, the obtained suspension is heated while being stirred, and the polymerization reaction is started. It is preferable that the polymerizable mixture and the aqueous solution before the temperature rise are degassed under reduced pressure or subjected to nitrogen substitution to remove dissolved oxygen. The polymerization temperature during the polymerization reaction is an important condition for obtaining the copolymer (block/graft copolymer) of the present invention with a high yield. The polymerization temperature here denotes the temperature of the suspension. The polymerization temperature is preferably in a range of 50°C to 90°C, more preferably in a range of 60°C to 85°C, and still more preferably in a range of 65°C to 80°C. When the polymerization temperature is extremely low, there is a concern that the reaction proceeds slowly and thus the polymerization time increases. Further, when the polymerization temperature is extremely high, cleavage of an adduct radical, which is a reaction intermediate, is prioritized, and thus the yield of the copolymer (block/graft polymer) of the present invention tends to decrease.

The suspension can be heated for the purpose of increasing the reaction rate of the polymerizable composition (X) and eliminating the unreacted radical polymerization initiator at a later stage of the polymerization reaction. The temperature of heating the suspension is preferably 80°C or higher and more preferably 85°C or higher. The temperature rise time may be determined by calculating the time until the radical polymerization initiator is eliminated, and is usually approximately 30 minutes to 2 hours.

### v) Recovery step

After the step, the suspension is cooled to room temperature or lower, and the generated bead-like copolymer is recovered by a known method such as filtration. A washing step for removing impurities such as a dispersant and an electrolyte, a step of removing beads mixed with air bubbles, a drying step, and the like can be performed as necessary. The finally obtained bead-like copolymer (block/graft copolymer) is used as the copolymer of the present invention.

### [Radical polymerization initiator]

When the polymerization reaction is carried out in the presence of a radical polymerization initiator, a known organic peroxide such as 2,4-dichlorobenzoyl peroxide or t-butylperoxy pivalate, or a known azo compound such as 2,2'-azobisisobutyronitrile or 2,2'-azobis(2,4-dimethylvaleronitrile) can be used as the radical polymerization initiator.

The amount of the radical polymerization initiator to be blended can be appropriately selected by a technique known to those skilled in the art. The typical blending amount of the radical polymerization initiator is in a range of 0.0001 to 10 parts by mass with respect to 100 parts by mass of the total amount of the polymerizable composition (X).

### [Other components (Q)]

Other components (Q) are added to the resin composition as necessary. Examples of other components (Q) include a release agent, an antioxidant, a heat stabilizer, an impact resistance improver, a flexibility imparting agent, a weather resistance improver, a colorant, an inorganic pigment, an organic pigment, carbon black, ferrite, a conductivity imparting agent, an ultraviolet absorbing agent, an infrared absorbing material, a lubricant, an inorganic filler, a reinforcing agent, a plasticizer, a reverse plasticizer, a neutralizer, a crosslinking agent, a flame retardant, a preservative, an insect repellent, a fragrant, a radical scavenger, a sound absorbing material, and core-shell rubber.

### [Molded product and production method thereof]

The molded product of the present invention can be obtained by molding pellets of the resin composition of the present invention using a known melt molding method such as extrusion molding, injection molding, compression molding, or hollow molding.

The shape of the molded product of the present invention is not particularly limited, and examples thereof include a film shape, a sheet shape, a plate shape, a substantially box shape, and a three-dimensional shape having a curved surface portion.

Since the molded product of the present invention is excellent in impact resistance and transparency in a wide use temperature range, the molded product can be suitably used for liquid crystal or organic EL display front plates, signboard products, lighting products, home appliances, vehicle interior/exterior materials, industrial materials, construction materials, lenses, light guide plates, light condensing members, optical films used for liquid crystal or organic EL displays, and the like.

The filmy molded product of the present invention has excellent impact resistance and transparency in a wide use temperature range, and whitening of the filmy molded product is unlikely to occur when the filmy molded product is bent. In addition, the filmy molded product of the present invention is unlikely to break when repeatedly bent, and thus can be suitably used for a foldable display or the like.

The molded product of the present invention has a Charpy impact strength (without notches) of preferably 30 kJ/m² or greater and 100 kJ/m² or less and preferably 50 kJ/m² or greater and 100 kJ/m² or less.

The molded product of the present invention has a bending elastic modulus of preferably 1500 MPa or greater and 5000 MPa or less and more preferably 2000 MPa or greater and 3000 MPa or less.

The molded product of the present invention has an MFR of preferably 2.0 g/10 min or greater and 50 g/10 min or less and more preferably 15 g/10 min or greater and 40 g/10 min or less.

The molded product of the present invention has a haze value of preferably less than 15%, preferably 10% or less, more preferably 5% or less, and still more preferably 2% or less at room temperature of 23°C.

The molded product of the present invention has a haze value of preferably less than 15%, more preferably 10% or less, and still more preferably 5% or less at room temperature of 80°C.

The filmy molded product of the present invention has an elastic modulus of preferably 1000 to 5000 MPa and more preferably 1500 to 3000 MPa.

The filmy molded product of the present invention has a maximum point strength of preferably 30 to 90 MPa and more preferably 40 to 80 MPa.

The filmy molded product of the present invention has a breaking elongation of preferably 1% to 30% and more preferably 2% to 20%.

### [Examples]

Hereinafter, the present invention will be described in more detail with reference to examples and comparative examples, but the present invention is not limited to the following examples.

### <Evaluation method>

The evaluations in examples and comparative examples were carried out by the following methods.

### (Mass average molecular weight (Mw) and number average molecular weight (Mn) of macromonomer (A))

The mass average molecular weight (Mw) and the number average molecular weight (Mn) of the macromonomers (A) obtained in examples and comparative examples were measured by a gel permeation chromatography (GPC) method. 10 mg of the obtained copolymer was dissolved in 10 ml of tetrahydrofuran, and a solution filtered through a 0.45 µm filter was used as a sample for GPC measurement.

A polymer measurement guard column (trade name: TSK-GUARD COLUMN SUPER H-H, manufactured by Tosoh Corporation) and two polymer measurement columns (trade name: TSK-GEL SUPER HM-H, manufactured by Tosoh Corporation) were connected to a gel permeation chromatography measuring device (model name: HLC-8320 type, manufactured by Tosoh Corporation) in series and used.

Further, a differential refractometer (RI) was used as a detector. The measurement was carried out under conditions of a separation column temperature of 40°C, a flow rate of a moving layer of 0.6 mL/min, and a sample injection amount of 10 µl using tetrahydrofuran as the moving layer. A calibration curve was created using a plurality of kinds of polymethyl methacrylates with known molecular weights (manufactured by Polymer Laboratories, peak molecular weight (Mp) of 1,560 to 19,500,000) as standard polymers, and the Mw and the Mn were acquired.

### (Mass average molecular weight (Mw) and number average molecular weight (Mn) of copolymer)

The mass average molecular weight (Mw) and the number average molecular weight (Mn) of the copolymers obtained in examples and comparative examples were measured by a gel permeation chromatography (GPC) method. 10 mg of the obtained copolymer was dissolved in 10 ml of tetrahydrofuran, and a solution filtered through a 0.45 µm filter was used as a sample for GPC measurement. In the GPC measurement of the copolymers, a polymer measurement guard column (trade name: TSK-GUARD COLUMN SUPER H-H, manufactured by Tosoh Corporation) and one ultrahigh molecular weight measurement column (trade name: TSK-GEL GMHHR-H, manufactured by Tosoh Corporation) were connected to a high performance liquid chromatography measuring device (model name: HLC-8320 type, manufactured by Tosoh Corporation) in series and used.

Further, a differential refractometer (RI) was used as a detector. The measurement was carried out under conditions of a separation column temperature of 40°C, a flow rate of a moving layer of 0.6 mL/min, and a sample injection amount of 10 µl using tetrahydrofuran as the moving layer. A calibration curve was created using a plurality of kinds of polymethyl methacrylates with known molecular weights (manufactured by Polymer Laboratories, peak molecular weight (Mp) of 1,560 to 19,500,000) as standard polymers, and the mass average molecular weight (Mw) and the number average molecular weight (Mn), which are relative molecular weights in terms of polymethyl methacrylate, were acquired.

### (Preparation of test piece)

The copolymers obtained in the examples and the comparative examples and ACRYPET VH001 (trade name, manufactured by Mitsubishi Chemical Corporation, (meth)acrylic polymer (M1) in the present example) used as the (meth)acrylic polymer (M) were melt-kneaded using a 35 mmϕ screw type twin-screw extruder (LID = 26), thereby obtaining a pellet-like resin composition. Each of the obtained resin compositions was subjected to injection molding using an injection molding machine (manufactured by Toshiba Machine Co., Ltd., model name: IS100) under conditions of a cylinder temperature of 250°C, a metal mold temperature of 80°C, and a molding time of 15 seconds, thereby obtaining a plate-shaped molded product (width of 50 mm, length of 100 mm, and thickness of 3 mm) and a rod-like molded product (width of 8 mm, length of 80 mm, and thickness of 4 mm). These molded products were used as test pieces for evaluation.

### (Charpy impact test)

The Charpy impact strengths (unit: kJ/m²) of the test pieces (without notches) obtained from the rod-like molded products were measured in conformity with JIS K 7111 using a Charpy impact tester (trade name: DG-CP, manufactured by Toyo Seiki Co., Ltd.) as an index of the impact resistance of the molded products obtained in the examples and the comparative examples. Five test pieces were tested for each example using a 15 J hammer, and the average value thereof was calculated.

A three-stage evaluation was performed according to the following determination criteria.
AA: The Charpy impact strength was 50 kJ/m² or greater
A: The Charpy impact strength was 30 kJ/m² or greater and less than 50 kJ/m²
B: The Charpy impact strength was less than 30 kJ/m²

### (Bending elasticity test)

The bending elastic moduli (unit: MPa) of the test pieces obtained from the rod-like molded products were measured in conformity with JIS K 7171 using a Tensilon universal tester (trade name: RTC-1250A, manufactured by Orientec Co., Ltd.) as an index of the rigidity of the molded products obtained in the examples and the comparative examples. The bending elastic moduli were obtained from the stress-strain curve obtained under conditions of room temperature of 23°C and a test speed of 2 mm/min.

A three-stage evaluation was performed according to the following determination criteria.
AA: The bending elastic modulus was 2000 MPa or greater
A: The bending elastic modulus was 1500 MPa or greater and less than 2000 MPa
B: The bending elastic modulus was less than 1500 MPa

### (Evaluation of melt viscosity)

The melt flow rate (MFR) (unit: g/10 min) measured under conditions of a temperature of 230°C and a load of 37.3 N was measured in conformity with JIS K 7210 (A method) using a melt indexer (device name: L243, manufactured by Technol Seven Co., Ltd.) as an index of the melt moldability of the resin compositions obtained in the examples and the comparative examples. The heating time of the resin composition was set to 4 minutes, and the sample cutting time interval was set to 10 seconds to 120 seconds according to the MFR value of the sample.

A three-stage evaluation was performed according to the following determination criteria.
AA: The MFR was 15g/10 min or greater
A: The MFR was 2.0 g/10 min or greater and less than 15 g/10 min
B: The MFR was less than 2.0 g/10 min

### (Haze evaluation)

The haze (unit: %) of the test pieces obtained from the plate-like molded products was measured at room temperature of 23°C and 80°C in conformity with JIS K 7316 using a haze meter (device name: NDH2020, manufactured by Nippon Denshoku Industries Co., Ltd.) as an index of the transparency of the molded products obtained in the examples and the comparative examples. In the measurement at 80°C, the plate-like molded products were allowed to stand in an environment of 80°C for 1 hour, and the measurement was performed promptly.

A three-stage evaluation was performed according to the following determination criteria.
AA: The haze was less than 10%
A: The haze was 10% or greater and less than 15%
B: The haze was 15% or greater

### (Handleability of copolymer)

The handleability of the copolymer was determined based on whether the copolymer was able to be handled as a solid. When the fluidity of bead-like particles or powder at room temperature was confirmed, it was determined that the copolymer had handleability.

### (Glass transition temperature of copolymer homopolymer of copolymer)

The glass transition temperature (Tg) of the comonomer homopolymer of the copolymer was calculated by Fox Equation based on the Tg of the homopolymer of the comonomer. The values in the document of POLYMER HANDBOOK FOURTH EDITION (2003) were adopted as the value of the Tg of the homopolymer of the comonomer.

### (Presence or absence of crosslinking of copolymer)

The presence or absence of crosslinking of the copolymer was determined based on the presence or absence of the solubility of the copolymer in a good solvent. When 10 mg of the polymer was dissolved in 10 ml of tetrahydrofuran and filtered through a 0.2 µm filter, it was determined that the crosslinking was present when a filtrate was not obtained.

### (Film tensile test)

A tensile test was performed by cutting the obtained film into a size of 150 mm × 15 mm by setting the film forming direction as a long side using a Tensilon universal tester (trade name: RTC-1250A, manufactured by Orientec Co., Ltd.) in conformity with JIS K 7127 under conditions of a chuck distance of 100 mm and a tensile rate of 100 mm/min, and the elastic modulus, the maximum point strength, and the breaking elongation of the film were measured.

### (Raw materials)

The abbreviations of compounds used in the examples and the comparative examples are as follows.
MMA: methyl methacrylate (trade name: ACRYESTER (registered trademark) M, manufactured by Mitsubishi Chemical Corporation)
MA: methyl acrylate (manufactured by Mitsubishi Chemical Corporation)
EA: ethyl acrylate (manufactured by Mitsubishi Chemical Corporation)
BA: n-butyl acrylate (manufactured by Mitsubishi Chemical Corporation)
St: styrene (manufactured by FUJIFILM Wako Pure Chemical Corporation)
Chain transfer agent (1): chain transfer catalyst produced in Production Example 2
Chain transfer agent (2): Co (ll)-(2,3-dioxyiminobutane-BF2) 2 (manufactured by STREM Chemicals, Inc.)
Dispersant (1): dispersant produced in Production Example 1
Polymerization initiator (1): 1,1,3,3-tetramethylbutylperoxy 2-ethylhexanoate (trade name: PEROCTA O, manufactured by NOF Corporation)
Polymerization initiator (2): 4,4-azobis(4-cyanovaleric acid) (trade name: V501, manufactured by FUJIFILM Wako Pure Chemical Corporation)
Polymerization initiator (3): 2,2'-azobis(2-methylbutyronitrile) (trade name: V-59, manufactured by FUJIFILM Wako Pure Chemical Corporation)
Polymerization initiator (4): sodium persulfate (manufactured by FUJIFILM Wako Pure Chemical Corporation)
Chain transfer agent (3): n-octyl mercaptan (manufactured by FUJIFILM Wako Pure Chemical Corporation)
Chain transfer agent (4): dodecyl mercaptan (manufactured by Kao Corporation, trade name: THIOKALCOL 20)
(Meth)acrylic polymer (M1): acrylic resin containing 98% by mass of methyl methacrylate unit (trade name: ACRYPET (registered trademark) VH001, manufactured by Mitsubishi Chemical Corporation)
Rubber-containing acrylic resin (1): pellet-like (meth)acrylic resin composition containing core-shell rubber (trade name: IRG304, manufactured by Mitsubishi Chemical Corporation)
Rubber-containing acrylic resin (2): pellet-like (meth)acrylic resin composition containing core-shell rubber (trade name: IRG504, manufactured by Mitsubishi Chemical Corporation)

### [Production Example 1: synthesis of dispersant (1)]

A reactor equipped with a stirrer, a cooling pipe, and a thermometer was charged with 61.6 parts of a 17 mass% potassium hydroxide aqueous solution, 19.1 parts of MMA, and 19.3 parts of deionized water. Next, the liquid in the reactor was stirred at room temperature, the exothermic peak was confirmed, and the solution was stirred for 4 hours. Thereafter, the reaction solution in the reactor was cooled to room temperature, thereby obtaining a potassium methacrylate aqueous solution.

Next, a polymerization device equipped with a stirrer, a cooling pipe, and a thermometer was charged with 900 parts of deionized water, 70 parts of a 42 mass% 2-sulfoethyl sodium methacrylate aqueous solution (trade name: ACRYESTER SEM-Na, manufactured by Mitsubishi Chemical Corporation), 16 parts of the potassium methacrylate aqueous solution, and 7 parts of MMA, the mixture was stirred, and the liquid in the reactor was heated to 50°C while the air in the polymerization device was substituted with nitrogen. 0.053 parts of V-50 (trade name, manufactured by FUJIFILM Wako Pure Chemical Corporation, 2,2'-azobis(2-methylpropionamidine) dihydrochloride) serving as a polymerization initiator was added as the polymerization device, and the liquid in the reactor was heated to 60°C. After the addition of the polymerization initiator, 1.4 parts of MMA was divided and added a total of 5 times every 15 minutes (7 parts in total of MMA). Thereafter, the liquid in the polymerization device was maintained at 60°C for 6 hours while being stirred, and cooled to room temperature, thereby obtaining a dispersant (1) having a solid content of 8% by mass, which was a transparent aqueous solution.

### [Production Example 2: synthesis of chain transfer agent (1)]

2.00 g (8.03 mmol) of cobalt (ll) acetate tetrahydrate (manufactured by FUJIFILM Wako Pure Chemical Corporation, Wako special grade), 3.86 g (16.1 mmol) of diphenylglyoxime (manufactured by Tokyo Chemical Industry Co., Ltd., EP grade), and 100 ml of diethyl ether deoxidized by nitrogen bubbling in advance were added to a synthesizer equipped with a stirrer in a nitrogen atmosphere, and stirred at room temperature for 2 hours.

Next, 20 ml of a boron trifluoride diethyl ether complex (manufactured by Tokyo Chemical Industry Co., Ltd., EP grade) was added thereto, and the mixture was further stirred for 6 hours. The obtained mixture was filtered, and the solid was washed with diethyl ether, and dried at 20°C and 100 MPa or less for 12 hours, thereby obtaining 5.02 g (7.93 mmol, yield of 99% by mass) of a chain transfer agent (1) of a brown solid.

### [Production Example 3: synthesis of macromonomer (A-1)]

145 parts of deionized water, 0.1 parts of sodium sulfate (Na₂SO₄), and 0.26 parts by mass of the dispersant (1) (solid content of 8% by mass) produced in Production Example 1 were added to a polymerization device equipped with a stirrer, a cooling pipe, and a thermometer, and the mixture was stirred to obtain a uniform aqueous solution. Next, 95 parts of MMA, 5.0 parts of MA, 0.003 parts of the chain transfer agent (1) produced in Production Example 2, and 0.25 parts of the polymerization initiator (1) were added thereto to prepare an aqueous dispersion liquid.

Next, the air inside the polymerization device was sufficiently substituted with nitrogen, and the aqueous dispersion liquid was heated to 80°C and maintained for 3 hours, and heated to 90°C and maintained for 2 hours. Thereafter, the reaction solution was cooled to 40°C to obtain an aqueous suspension of the macromonomer. The aqueous suspension was filtered through a filter cloth, and the filtrate was washed with deionized water and dried at 40°C for 16 hours, thereby obtaining a macromonomer (A-1). The evaluation results of the obtained macromonomer are listed in Table 1.

### [Production Examples 4 to 10: synthesis of macromonomers (A-2) to (A-8)]

Macromonomers (A-2) to (A-8) were obtained by the same method as in Production Example 3 except that the charged composition was changed to the amount listed in Table 1. The evaluation results of the obtained macromonomer are listed in Table 1.

### [Example 1: synthesis of copolymer (1)]

40 parts of the macromonomer (A-11), 49.8 parts of BA, and 10.2 parts of St were added to a polymerization device equipped with a stirrer, a cooling pipe, and a thermometer and started to be stirred. Next, the polymerization device was heated with warm water at 65°C, and the macromonomer (A-1) was dissolved in BA and St, thereby obtaining a uniform syrup. After the syrup was cooled to 40°C, 0.5 parts of the polymerization initiator (3) was added thereto and stirred for dissolution.

Next, a mixed solution of 150 parts of deionized water, 0.26 parts of the dispersant (1), and 0.3 parts of sodium sulfate was prepared as an aqueous solution, and the syrup was added thereto, and the solution was stirred to obtain a dispersion liquid. Next, the air inside the polymerization device was substituted with nitrogen. The dispersion liquid was heated to 80°C and maintained for 5 hours, and heated to 90°C and maintained for 1 hour. After the dispersion liquid was cooled to 40°C or lower, the dispersion liquid was filtered through a filter cloth, and the filtrate was washed with deionized water. Thereafter, the filtrate was dried at 40°C for 12 hours under reduced pressure, thereby obtaining a bead-like copolymer (1). The Tg of the homopolymer of styrene (St) is 100°C (POLYMER HANDBOOK FOURTH EDITION, 2003), and the Tg of the homopolymer of n-butyl acrylate (BA) is -54°C (POLYMER HANDBOOK FOURTH EDITION, 2003). The Tg of the homopolymer of the comonomer (B) unit of the copolymer (1) was -37.5°C when calculated using Fox Equation. The charged composition and the evaluation results of the obtained bead-like copolymer are listed in Table 2.

### [Example 2: synthesis of copolymer (2)]

A bead-like copolymer (2) was obtained by the same method as in Example 1 except that the charged composition was changed under the conditions listed in Table 2. The charged composition and the evaluation results of the obtained bead-like copolymer are listed in Table 2.

### [Example 3: synthesis of copolymer (3)]

An aqueous suspension containing 60 parts by mass of the macromonomer (A-2) was obtained by the same method as in Production Example 3 except that the charged composition was changed to the amount listed in Table 1. Specifically, 145 parts of deionized water, 0.1 parts of sodium sulfate (Na₂SO₄), and 0.26 parts by mass the dispersant (1) (solid content of 8% by mass) produced in Production Example 1 were added to a polymerization device equipped with a stirrer, a cooling pipe, and a thermometer and stirred, thereby obtaining a uniform aqueous solution. Next, 57 parts of MMA, 3 parts of MA, 0.0015 parts of the chain transfer agent (1) produced in Production Example 2, and 0.15 parts of the polymerization initiator (1) as the polymerization initiator were added thereto to prepare an aqueous dispersion liquid. Next, the air inside the polymerization device was sufficiently substituted with nitrogen, and the aqueous dispersion liquid was heated to 80°C and maintained for 3 hours, and heated to 90°C and maintained for 2 hours, thereby obtaining an aqueous suspension of the macromonomer (A-2).

Next, the reaction solution was cooled to 60°C, 33.2 parts of BA and 6.8 parts of St were added thereto, and the solution was stirred for 1 hour to dissolve the macromonomer (A-2) in BA and St, thereby obtaining a dispersion liquid.

Next, the dispersion liquid was cooled to 40°C, 0.5 parts of the polymerization initiator (3) was added thereto, the solution was stirred for dissolution. The dispersion liquid was heated to 80°C and maintained for 5 hours, and heated to 90°C and maintained for 1 hour. After the dispersion liquid was cooled to 40°C or lower, the dispersion liquid was filtered through a filter cloth, and the filtrate was washed with deionized water. Thereafter, the filtrate was dried at 40°C for 12 hours under reduced pressure, thereby obtaining a bead-like copolymer (3). The charged composition and the evaluation results of the obtained bead-like copolymer are listed in Table 2.

### [Example 4: synthesis of copolymer (4)]

A bead-like copolymer (4) was obtained by the same method as in Example 1 except that the charged composition was changed under the conditions listed in Table 2. The charged composition and the evaluation results of the obtained bead-like copolymer are listed in Table 2.

### [Example 9: synthesis of copolymer (10)]

60 parts of the macromonomer (A-7) obtained in Production Example 9, 150 parts of deionized water, 0.26 parts of the dispersant (1), and 0.3 parts of sodium sulfate were added to a polymerization device equipped with a stirrer, a cooling pipe, and a thermometer, and the mixture was stirred to obtain an aqueous suspension. Next, the temperature inside the polymerization device was raised to 70°C, and 33.2 parts of BA and 6.8 parts of St were slowly added thereto. Thereafter, the mixture was maintained at 70°C for 1 hour with being stirred to dissolve the macromonomer (A-7) in BA and St, thereby obtaining a dispersion liquid. Next, the inside the polymerization device was cooled to 40°C, 0.5 parts of the polymerization initiator (3) was added thereto, the solution was stirred for 30 minutes for dissolution. Next, the air inside the polymerization device was sufficiently substituted with nitrogen, and the aqueous dispersion liquid was heated to 82°C and maintained for 4 hours, and heated to 90°C and maintained for 1 hour. After the dispersion liquid was cooled to 40°C or lower, the dispersion liquid was filtered through a filter cloth, and the filtrate was washed with deionized water. Thereafter, the filtrate was dried at 40°C for 12 hours in a hot air circulation type dryer, thereby obtaining a bead-like copolymer (10). The charged composition and the evaluation results of the obtained bead-like copolymer are listed in Table 2.

### [Example 10: synthesis of copolymer (11)]

A bead-like copolymer (11) was obtained by the same method as in Example 9 except that the charged composition was changed under the conditions listed in Table 2. The charged composition and the evaluation results of the obtained bead-like copolymer are listed in Table 2.

### [Comparative Example 1: synthesis of copolymer (5)]

A bead-like copolymer (5) was obtained by the same method as in Example 1 except that the charged composition was changed under the conditions listed in Table 3. The charged composition and the evaluation results of the obtained bead-like copolymer are listed in Table 3.

### [Comparative Example 2: synthesis of copolymer (6)]

A bead-like copolymer (6) was obtained by the same method as in Example 1 except that the charged composition was changed under the conditions listed in Table 3. 0.1 parts of the chain transfer agent (3) used as the chain transfer agent was added simultaneously with the addition of the initiator. The charged composition and the evaluation results of the obtained bead-like copolymer are listed in Table 3.

### [Comparative Example 3: synthesis of copolymer (7)]

50 parts of the macromonomer (A-5), 50 parts of BA, 100 parts of toluene, and 0.3 parts of the polymerization initiator (3) were added to a polymerization device equipped with a stirrer, a cooling pipe, and a thermometer and started to be stirred. A uniform solution obtained by dissolving the macromonomer (A-5) was confirmed, and the inside the polymerization device was substituted with nitrogen. The reaction solution was heated to 69°C and maintained for 8 hours, and cooled to 40°C or lower to obtain a polymer solution. Thereafter, the obtained polymer solution was diluted with toluene such that the solid content concentration of the solution reached 10% by mass, and the solution was added dropwise to methanol in an amount 10 times the amount of the diluted polymer solution to generate a precipitate. The obtained precipitate was recovered and dried, thereby obtaining a copolymer (7). The charged composition and the evaluation results of the obtained bead-like copolymer are listed in Table 3.

### [Comparative Example 4: synthesis of copolymer (8)]

A monomer emulsion consisting of 11.6 parts of deionized water, 2.0 parts of Emar 20C (trade name, manufactured by Kao Corporation, 25% aqueous solution of sodium lauryl ether sulfate, 65.0 parts of BA, and 0.02 parts of the chain transfer agent (4) was prepared in a spare flask. 22.8 parts of deionized water, 147.2 parts by mass of the macromonomer (A-6) (solid content concentration of 23.7% by mass), and 15.7 parts (corresponding to 20% by mass of the entire monomer emulsion) of the monomer emulsion were added to a polymerization device equipped with a stirrer, a cooling pipe, and a thermometer at room temperature. Next, the reaction mixture was heated to 85°C while being stirred under a nitrogen purge. When the temperature reached 85°C, 0.07 parts of the polymerization initiator (4) was introduced. The remaining monomer emulsion was added dropwise over 30 minutes while the reaction mixture was maintained at 90°C. After completion of the dropwise addition, the mixture was maintained at 90°C for 1 hour. After the mixture was cooled, the cullet was removed with a filter cloth, and the latex was recovered. The solid content concentration of the obtained latex was 40.8% by mass, and the volume average particle diameter thereof measured by a laser diffraction/scattering type particle size distribution meter (LA-960S, manufactured by Horiba, Ltd.) was 96 nm. Further, the Mn measured by GPC was 125,200, and the Mw was 3,670,300. The charged composition and the evaluation results are listed in Table 3.

A 5% aqueous solution of calcium acetate was added to solidify and recover the copolymer (8) obtained as latex. However, the copolymer (8) generated a white pastelike highly viscous liquid precipitate, which was not able to be recovered. Since the moisture contained in the highly viscous liquid precipitate was difficult to remove and the precipitate was in a liquid state, the precipitate was difficult to handle.

### [Comparative Example 5: synthesis of copolymer (9)]

A bead-like copolymer (9) was obtained by the same method as in Example 1 except that the charged composition was changed under the conditions listed in Table 3. Since the comonomer (B) did not contain the aromatic vinyl (B2), the chain transfer effect of the macromonomer (A) during the copolymerization reaction was insufficient, and the obtained copolymer was crosslinked. Therefore, the mass average molecular weight (Mw) of the obtained copolymer was not able to be measured.

### [Examples 5 to 8, Examples 11 and 12, and Comparative Examples 6 to 8]

The above-described copolymers (1) to (7), (10), and (11) were subjected to melt-kneading and injection molding using a twin-screw extruder. The (meth)acrylic polymer (M1) was used as the (meth)acrylic polymer (M), and the copolymer and the (meth)acrylic polymer (M1) at the blending ratio listed in Table 4 were melt-kneaded using a 26 mmϕ screw type twin-screw extruder (TEM-26SX, manufactured by Toshiba Machine Co., Ltd.) under conditions of a cylinder temperature of 200°C to 240°C and a die temperature of 240°C, thereby obtaining a pellet-like resin composition.

Thereafter, test pieces for evaluation were prepared using the obtained resin composition. The evaluation results of the obtained test pieces are listed in Tables 4 and 5.

### [Comparative Example 9]

Test pieces for evaluation were prepared using the rubber-containing acrylic resin (1) as the (meth)acrylic polymer (M). The results of the obtained test pieces are listed in Table 5.

### [Reference Example 1]

Test pieces for evaluation were prepared using the (meth)acrylic polymer (M1) as the (meth)acrylic polymer (M). The results of the obtained test pieces are listed in Table 5.

The resin compositions of Examples 5 to 8, 11, and 12 had favorable melt moldability. Further, the obtained molded products had favorable impact resistance and elastic moduli, and the transparency thereof at room temperature and 80°C was favorable.

That is, as shown in Examples 5 to 8, 11, and 12, the resin composition of the present invention had an MFR (melt flow rate) of greater than 2.0 g/10 min at a temperature of 230°C and a load of 37.3 N, had excellent fluidity than that of the (meth)acrylic polymer (M1) alone, and also had excellent melt moldability. As a result, the resin composition of the present invention can be subjected to injection molding or extrusion molding to produce a molded product having a small thickness or a molded product having a complicated shape. Further, the molded product of the present invention can be formed into a molded product having a Charpy impact strength (without notches) of 30 kJ/m² or greater and having a bending elastic modulus of 1500 MPa or greater. In general, the impact resistance of the molded product tends to decrease as the elastic modulus increases, and accordingly, the impact resistance and the elastic modulus are in a so-called trade-off relationship. That is, the molded product of the present invention is a molded product having a significant characteristic of achieving both the impact resistance and the elastic modulus, which are contradictory characteristics. Further, the molded product of the present invention has excellent transparency with a haze of less than 15% at room temperature (23°C) and 80°C, and can be said to be used as a transparent material in a wide temperature range.

The molded product obtained in Comparative Example 6 had insufficient transparency at room temperature and 80°C because the comonomer (B) did not contain the aromatic vinyl (B1). Further, since the molecular weight of the macromonomer (A) used for the synthesis of the copolymer (5) was small, the obtained molded product had insufficient impact resistance.

The molded product obtained in Comparative Example 7 had insufficient transparency at 80°C because the comonomer (B) did not contain the aromatic vinyl (B1). Further, since the comonomer (B) used for the synthesis of the copolymer (6) contained MMA and the Tg of the polymer chain containing the comonomer (B) unit was relatively high, the obtained molded product had insufficient impact resistance.

Further, the Tg of the homopolymer of methyl methacrylate (MMA) was 105°C (POLYMER HANDBOOK FOURTH EDITION, 2003), and the Tg of the homopolymer of n-butyl acrylate (BA) was -54°C (POLYMER HANDBOOK FOURTH EDITION, 2003), and thus the Tg of the polymer chain having the comonomer (B) unit of the copolymer (6) calculated by Fox Equation was -9.7°C.

The molded product obtained in Comparative Example 8 had insufficient transparency at 80°C because the comonomer (B) did not contain the aromatic vinyl (B1). Further, since the molecular weight of the copolymer (7) was low, the obtained molded product had insufficient impact resistance.

The resin composition of Comparative Example 9 had insufficient melt moldability. Further, the obtained molded product had favorable impact resistance and a favorable elastic modulus, but had insufficient transparency at 80°C because the molded product did not contain the copolymer of the present invention.

The resin composition of Reference Example 1 had degraded melt moldability as compared with those of Examples 5 to 8. Further, the obtained molded product had degraded impact resistance as compared with those of Examples 5 to 8.

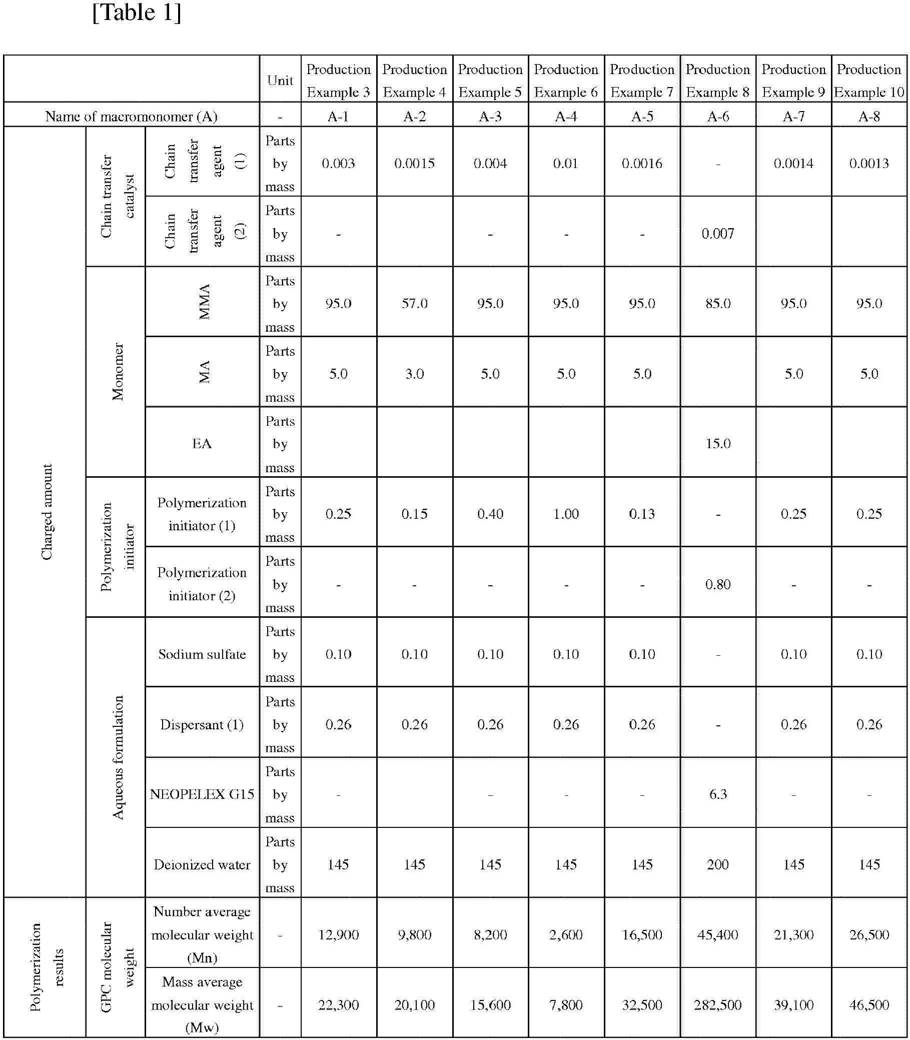

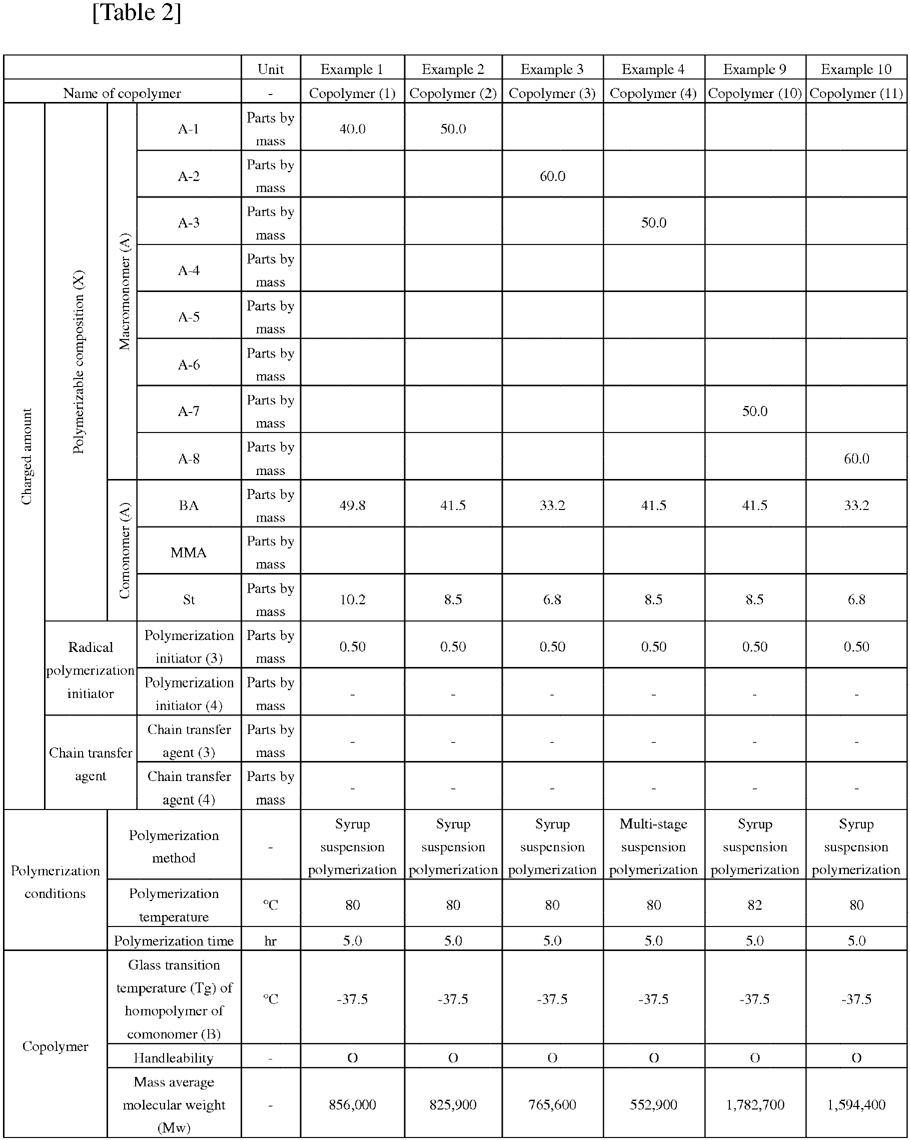

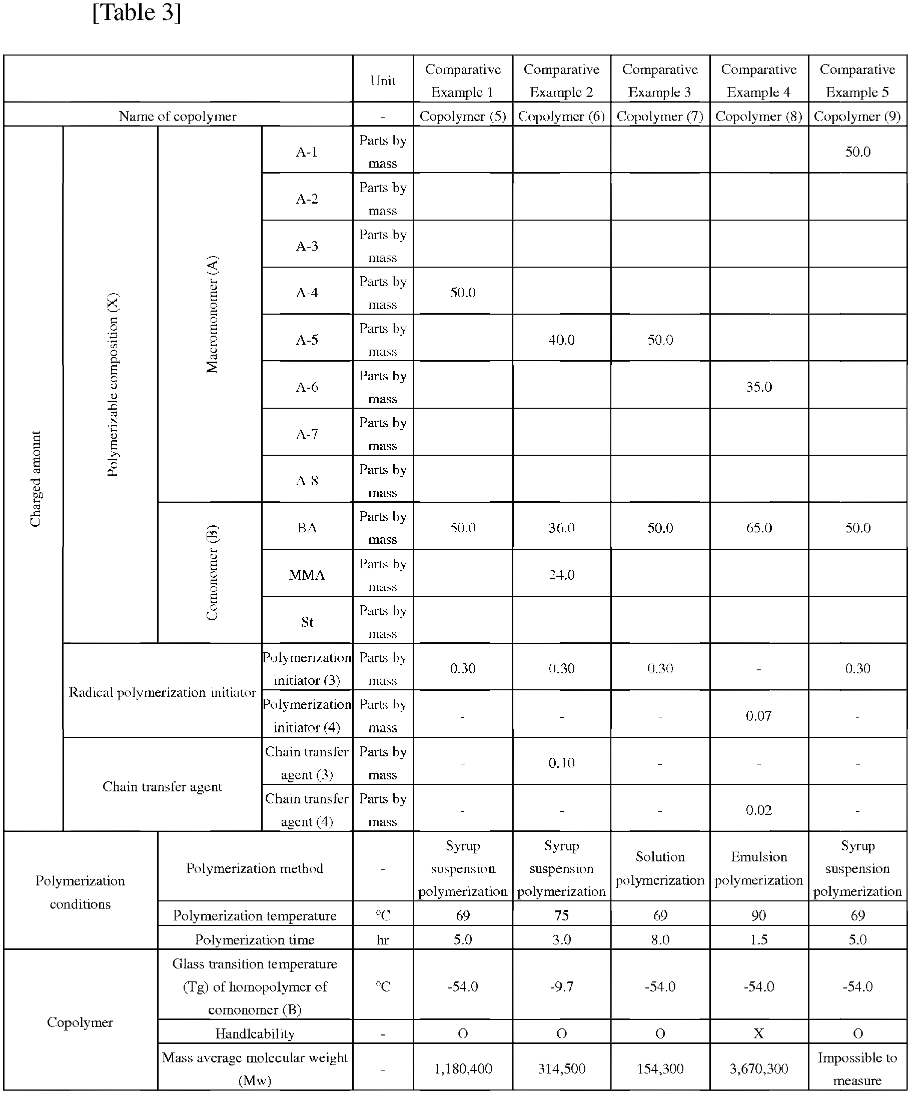

**[Table 4]**

| | | | | Example 5 | Example **6** | Example 7 | Example a | Example 11 | Example 12 |
|---|---|---|---|---|---|---|---|---|---|
| Resin composition | (Meth)acrylic polymer (M1) | | Parts by mass | 67 | 60 | 50 | 60 | 80 | 62.5 |
| | Copolymer | Copolymer (1) | Perts by mass | 33 | - | - | - | - | - |
| | | Copolymer (2) | Parts by mass | - | 40 | - | - | - | - |
| | | Copolymer (3) | Parts by mass | - | - | 50 | - | - | - |
| | | Copolymer (4) | Parts by mass | - | - | - | 40 | - | - |
| | | Copolymer (5) | Parts by mass | - | - | - | - | - | - |
| | | Copolymer (6) | Parts by mass | - | - | - | - | - | - |
| | | Copolymer (7) | Parts by mass | - | - | - | - | - | - |
| | | Copolymer (10) | Parts by mass | - | - | - | - | 20 | - |
| | | Copolymer (11) | Parts by mass | - | - | - | - | - | 37.5 |
| | Rubber-containing acrylic resin (1) | | Parts by mass | - | - | - | - | - | - |
| | MFR | | g/10 min | 22.0 | 16.0 | 5.8 | 34.9 | 2.9 | 3.6 |
| | | | Determined | AA | AA | A | AA | A | A |
| Molded product evaluation results | Chmpy impact strength (without notches) | | kJ/m² | 72.8 | 50.0 | 46.0 | 43.9 | 31.9 | 30.0 |
| | | | Determined | AA | AA | A | A | A | A |
| | Bending elastic modulus | | MPa | 2000 | 2000 | 2100 | 1700 | 2800 | 2500 |
| | | | Determined | AA | AA | AA | A | AA | AA |
| | Haze | Room temperature (23°C) | % | 0.9 | 1.0 | 1.2 | 1.6 | 0.7 | 0.8 |
| | | | Determined | AA | AA | AA | AA | AA | AA |
| | | 80°C | % | 6.0 | 4.3 | 2.8 | 10.7 | 2.1 | 1.7 |
| | | | Determined | AA | AA | AA | A | AA | AA |

**[Table 5]**

| | | | | Comparative Example 6 | Comparative Example 7 | Comparative Example 8 | Comparative Example 9 | Reference Example 1 |
|---|---|---|---|---|---|---|---|---|
| Resin composition | (Mcth)acrylic polymer (Ml) | | Parts by mass | 70 | 72 | 70 | - | 100 |
| | Copolymer | Copolymer (1) | Parts by mass | - | - | - | - | - |
| | | Copolymer (2) | Parts by mass | - | - | - | - | - |
| | | Copolymer (3) | Parts by mass | - | - | - | - | - |
| | | Copolymer (4) | Parts by mass | - | - | - | - | - |
| | | Copolymer (5) | Parts by mass | 30 | - | - | - | - |
| | | Copolymer (6) | Parts by mass | - | 28 | - | - | - |
| | | Copolymer (7) | Parts by mass | - | - | 30 | - | - |
| | | Copolymer (10) | Parts by mass | | | | | |
| | | Copolymer (11) | Parts by mass | | | | | |
| | Rubber-containing acrylic resin (1) | | Parts by mass | - | - | - | 100 | - |
| | MFR | | Parts by mass | 63.4 | 8.2 | 12.5 | 1.3 | 2.0 |
| | | | Parts by mass | AA | A | A | B | B |
| Molded product evaluation results | Charpy impact strength (without notches) | | kJ/m² | 16.6 | 20.6 | 25.1 | 48.0 | 20.0 |
| | | | Determined | B | B | B | A | B |
| | Bending elastic modulus | | MPa | 1600 | 2500 | 2200 | 2400 | 3300 |
| | | | Determined | Λ | AA | AA | AA | AA |
| | Haze | Room temperature (23°C) | % | 65.7 | 13.8 | 13.6 | 0.5 | 0.3 |
| | | | Determined | B | A | A | AA | AA |
| | | 80°C | % | 90.3 | 41.9 | 29.3 | 169 | 0.3 |
| | | | Determined | B | B | B | B | AA |

### [Examples 13 and 14]

A film was formed by using a resin composition obtained by blending the (meth)acrylic polymer (M1) and the copolymer (11) as listed in Table 6. Specifically, the resin composition was plasticized with a 40 mmϕ extruder in which the cylinder temperature was set to 240°C. Next, a film having a thickness of 50 µm was formed with a T-die in which the temperature was set to 240°C. The obtained film had no unevenness on the surface and had a favorable appearance quality. Further, the fold did not whiten when the film was bent. The results of the film tensile test are listed in Table 6.

### [Examples 15 and 16]

Each of pellet-like resin compositions was obtained by carrying out melt-kneading with a twin-screw extruder in the same manner as in Examples 5 to 8 except that the (meth)acrylic polymer (M1) and the copolymer (10) were blended as listed in Table 6. Next, a film having a thickness of 50 µm was obtained by the same method as in Examples 13 and 14. The obtained film had no unevenness on the surface and had a favorable appearance quality. Further, the fold did not whiten when the film was bent. The results of the film tensile test are listed in Table 6.

### [Comparative Examples 10 and 11]

Each of pellet-like resin compositions was obtained by carrying out melt-kneading with a twin-screw extruder in the same manner as in Examples 5 to 8 except that the (meth)acrylic polymer (M1) and the rubber-containing acrylic resin (1) were blended as listed in Table 6. Next, a film having a thickness of 50 µm was obtained by the same method as in Examples 13 and 14. The obtained film had no unevenness on the surface and had a favorable appearance quality, but the fold was whitened when the film was bent. The results of the film tensile test are listed in Table 6.

**[Table 6]**

| | | | Example 13 | Example 14 | Example 15 | Example 16 | Comparative Example 10 | Comparative Example 11 |
|---|---|---|---|---|---|---|---|---|
| (Meth)acrylic polymer (M1) | | Parts by mass | 80 | 60 | 75 | 62.5 | 20 | 60 |
| Copolymer | Copolymer (1) | Parts by mass | - | - | - | - | - | - |
| | Copolymer (2) | Parts by mass | - | - | - | - | - | - |
| | Copolymer (3) | Parts by mass | - | - | - | - | - | - |
| | Copolymer (4) | Parts by mass | - | - | - | - | - | - |
| | Copolymer (5) | Parts by mass | - | - | - | - | - | - |
| | Copolymer (6) | Parts by mass | - | - | - | - | - | - |
| | Copolymer (7) | Parts by mass | - | - | - | - | - | - |
| | Copolymer (10) | Parts by mass | - | - | 25 | 37.5 | - | - |
| | Copolymer (11) | Parts by mass | 20 | 40 | - | - | - | - |
| Rubber-containing acrylic resin (2) | | Parts by mass | - | - | - | - | 80 | 40 |
| MFR | | g/10 min | 2.9 | 4.1 | 3.1 | 3.6 | 1.1 | 1.6 |
| | | Determined | A | A | A | A | B | B |
| Tensile test | Elastic modulus | MPa | 2400 | 1700 | 2500 | 2200 | 1700 | 2200 |
| | Maximum point strength | MPa | 75 | 54 | 75 | as | 54 | 61 |
| | Breaking elongation | % | 7 | 17 | 5 | 3 | 7 | 4 |
| Whitening when bent | | | Not found | Not found | Not found | Not found | Found | Found |

### [Industrial Applicability]

The resin composition of the present invention contains the copolymer of the present invention as a constituent component and thus has excellent melt moldability.

Further, the molded product of the present invention is obtained by molding the resin composition and thus has excellent impact resistance and excellent transparency in a wide use temperature range.

## Claims

1. A copolymer which has a mass average molecular weight (Mw) of 240,000 or greater and 3,500,000 or less, the copolymer comprising:
a structural unit derived from an acrylate (B1); and
a structural unit derived from aromatic vinyl (B2),
wherein the copolymer has a branched structure.

2. The copolymer according to Claim 1,
wherein the branched structure includes the structural unit derived from the acrylate (B1) and the structural unit derived from the aromatic vinyl (B2).

3. The copolymer according to Claim 1 or 2,
wherein a main chain structure of the copolymer includes the structural unit derived from the acrylate (B1) and the structural unit derived from the aromatic vinyl (B2).

4. The copolymer according to any one of Claims 1 to 3,
wherein the copolymer has a structural unit derived from a macromonomer (A), and
the macromonomer (A) is represented by General Formula (1), 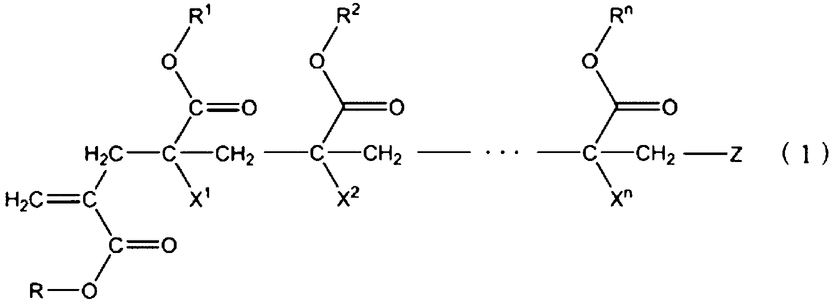
in Formula (1), R and R¹ to Rⁿ each independently represent a hydrogen atom, an alkyl group, a cycloalkyl group, an aryl group, or a heterocyclic group, X¹ to Xⁿ each independently represent a hydrogen atom or a methyl group, Z represents a terminal group, and n represents a natural number of 2 to 10,000.

5. The copolymer according to Claim 4,
wherein the structural unit derived from the macromonomer (A) includes 80% by mass or greater of a repeating unit derived from methyl methacrylate with respect to 100% by mass of a total mass of the structural unit derived from the macromonomer (A).

6. A copolymer comprising:
a structural unit derived from a macromonomer (A) represented by General Formula (1); and
a structural unit derived from a comonomer (B) that is copolymerizable with the macromonomer (A),
wherein the copolymer has a mass average molecular weight (Mw) of 240,000 or greater and 3,500,000 or less, and
the structural unit derived from the comonomer (B) includes a structural unit derived from an acrylate (B1) and a structural unit derived from aromatic vinyl (B2), 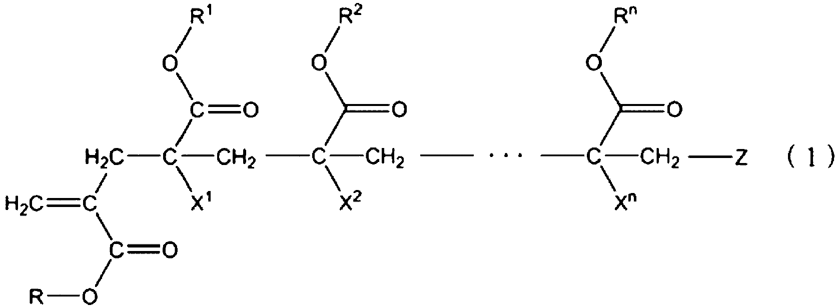
in Formula (1), R and R¹ to Rⁿ each independently represent a hydrogen atom, an alkyl group, a cycloalkyl group, an aryl group, or a heterocyclic group, X¹ to Xⁿ each independently represent a hydrogen atom or a methyl group, Z represents a terminal group, and n represents a natural number of 2 to 10,000.

7. The copolymer according to any one of Claims 4 to 6,
wherein the structural unit derived from the macromonomer (A) includes 80% by mass or greater of a repeating unit derived from methyl methacrylate with respect to 100% by mass of a total mass of the structural unit derived from the macromonomer (A).

8. The copolymer according to any one of Claims 4 to 7,
wherein the macromonomer (A) has a mass average molecular weight (Mw) of 10,000 or greater and 100,000 or less.

9. The copolymer according to any one of Claims 4 to 8,
wherein the macromonomer (A) has a mass average molecular weight (Mw) of 30,000 or greater and 100,000 or less.

10. The copolymer according to any one of Claims 1 to 9,
wherein in the acrylate (B1), a homopolymer of the acrylate (B1) has a glass transition temperature (Tg) of lower than 0°C.

11. A method for producing a copolymer, comprising:
a step of subjecting a mixture containing a polymerizable composition (X) and a polymerization initiator to a polymerization reaction,
wherein the polymerizable composition (X) consists of a macromonomer (A) represented by General Formula (1) and a comonomer (B) that is copolymerizable with the macromonomer (A), and
the comonomer (B) contains an acrylate (B1) and aromatic vinyl (B2), 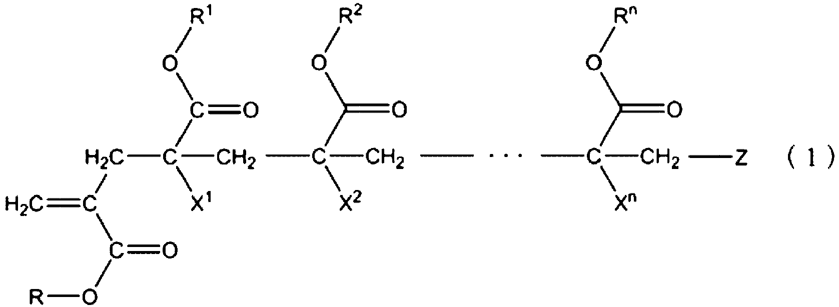
in Formula (1), R and R¹ to Rⁿ each independently represent a hydrogen atom, an alkyl group, a cycloalkyl group, an aryl group, or a heterocyclic group, X¹ to Xⁿ each independently represent a hydrogen atom or a methyl group, Z represents a terminal group, and n represents a natural number of 2 to 10,000.

12. The method for producing a copolymer according to Claim 11,
wherein the macromonomer (A) contains 80% by mass or greater of a repeating unit derived from methyl methacrylate with respect to 100% by mass of a total mass of the macromonomer (A).

13. The method for producing a copolymer according to Claim 11 or 12,
wherein the macromonomer (A) has a mass average molecular weight (Mw) of 10,000 or greater and 100,000 or less.

14. The method for producing a copolymer according to any one of Claims 11 to 13,
wherein in the acrylate (B1), a homopolymer of the acrylate (B 1) has a glass transition temperature (Tg) of lower than 0°C.

15. The method for producing a copolymer according to any one of Claims 11 to 14,
wherein a step of producing the macromonomer (A) by performing suspension polymerization and a step of producing the copolymer by performing suspension polymerization are performed in an identical reaction container.

16. A resin composition comprising:
a (meth)acrylic polymer (M); and
the copolymer according to any one of Claims 1 to 10,
wherein the (meth)acrylic polymer (M) has 80% by mass or greater of a repeating unit derived from methyl methacrylate with respect to 100% by mass of a total weight of the (meth)acrylic polymer (M).

17. The resin composition according to Claim 16,
wherein a content of the (meth)acrylic polymer (M) is 10% by mass or greater and 99% by mass or less, and a content of the copolymer is 1% by mass or greater and 90% by mass or less with respect to 100% by mass of a total mass of the resin composition.

18. The resin composition according to Claim 16 or 17,
wherein the resin composition is a molding material used for injection molding or extrusion molding.

19. The resin composition according to Claim 16 or 17,
wherein the resin composition is a molding material used for extruded film molding.

20. A molded product which is obtained by subjecting the resin composition according to any one of Claims 16 to 19 to injection molding or extrusion molding.

21. A filmy molded product which is obtained by subjecting the resin composition according to Claim 19 to extrusion molding.
